# EUROPÄISCHE PATENTSCHRIFT

(11) **EP 3 966 217 B1**
(45) Veröffentlichungstag und Bekanntmachung des Hinweises auf die Patenterteilung: **02.08.2023**
(21) Anmeldenummer: 19723400.8
(22) Anmeldetag: 10.05.2019
(51) Int. Cl.: C07F 7/08, C07F 17/00, B01J 31/00, B01J 31/14, B01J 31/22

(54) **KATIONISCHE GERMANIUM(II)-VERBINDUNGEN, VERFAHREN ZU DEREN HERSTELLUNG UND DEREN VERWENDUNG ALS KATALYSATOR IN DER HYDROSILYLIERUNG**
CATIONIC GERMANIUM (II) COMPOUNDS, PROCESS FOR PREPARING SAME, AND THEIR USE AS CATALYSTS IN HYDROSILYLATION
COMPOSÉS DE GERMANIUM(II) CATIONIQUES, PROCÉDÉ DE PRÉPARATION DE CES COMPOSÉS ET LEUR UTILISATION COMME CATALYSEURS D'HYDROSILYLATION

(43) Veröffentlichungstag der Anmeldung: 16.03.2022
(73) Patentinhaber: Wacker Chemie AG, 81737 München (DE)
(72) Erfinder: FRITZ-LANGHALS, Elke, 85521 Ottobrunn (DE); WEIDNER, Richard, 84489 Burghausen (DE); WERGE, Sven, 86551 Aichach (DE)
(74) Vertreter: Fritz, Helmut
(86) Internationale Anmeldenummer: PCT/EP2019/062003
(87) Internationale Veröffentlichungsnummer: WO 2020/228922

(56) Entgegenhaltungen:
- WO-A1-2017/174290
- FRANZ X. KOHL ET AL: "Darstellung und eigenschaften von pentamethylcyclopentadienylgermanium-chlor id und pentamethylcyclopentadienylgermanium-trich lor-germanat", JOURNAL OF ORGANOMETALLIC CHEMISTRY, Bd. 243, Nr. 1, 1. Februar 1983 (1983-02-01), Seiten 31-34, XP055651112, AMSTERDAM, NL ISSN: 0022-328X, DOI: 10.1016/0022-328X(83)80217-4
- Franz X Kohl ET AL: "Azinkomplexe des (Pentamethy1cyclopentadienyl)germanium- und -zinn-Kations", Chem. Ber, 1. Januar 1984 (1984-01-01), Seiten 1178-1193, XP055651118, Gefunden im Internet: URL:https://onlinelibrary.wiley.com/doi/pd fdirect/10.1002/cber.19841170331
- PETER. JUTZI ET AL: "Mixed germylenes from (pentamethylcyclopentadienyl)germanium chloride and (pentamethylcyclopentadienyl)germanium tetrafluoroborate", ORGANOMETALLICS, Bd. 5, Nr. 10, 1. Oktober 1986 (1986-10-01), Seiten 1944-1948, XP055651129, US ISSN: 0276-7333, DOI: 10.1021/om00141a003

## Beschreibung

Die Addition von Hydrosiliciumverbindungen an ungesättigte organische Verbindungen wie Alkene und Alkine spielt in der Technik eine wichtige Rolle. Diese als Hydrosilylierung bezeichnete Reaktion wird beispielsweise zur Vernetzung von Siloxanen und zur Einführung von funktionellen Gruppen in Silane oder Siloxane eingesetzt. Hydrosilylierungen laufen generell nur katalysiert ab. Stand der Technik sind vor allem Platin-, Rhodium- oder Iridium-Komplexe als Katalysatoren, die das Verfahren erheblich verteuern. Außerdem stehen die Edelmetalle als Rohstoffe nur begrenzt zur Verfügung und unterliegen nicht vorhersehbaren und nicht beeinflussbaren Preisschwankungen. Edelmetallfreie Katalysatorsysteme sind daher für Hydrosilylierungen von großem technischem Interesse.

Aus der WO2017/174290 ist bekannt, dass kationische Silicium(II)-Verbindungen Hydrosilylierungen katalysieren.

In der Angew. Chem. Int. Ed. 2017, 56, 1365 ist die Hydrosilylierung von Trifluoracetophenon und von CO₂ in Gegenwart eines heterocyclischen über Phosphor- und Stickstoffgruppierungen Donor-stabilisierten Germylens, welches ein elektrisch neutrales Germanium-Zentrum aufweist, beschrieben. Das Phosphorzentrum stellt bei diesen Verbindungen das Katalysezentrum dar, welches die Silicium-Wasserstoff-Verbindung für den Hydrosilylierungsprozess aktiviert.

Ein Problem der zuvor beschriebenen edelmetallfreien Katalysatoren ist, dass diese äußerst luft- und feuchtigkeitsempfindlich sind. Ihr Einsatz erfordert daher besondere Maßnahmen, die den Ausschluss von Luft und Feuchtigkeit gewährleisten.

Der technische Aufwand bei ihrer Herstellung und Verwendung wird dadurch größer. Außerdem sind sie bzw. ihre Vorstufen nur über aufwändige vielstufige Synthesen zugänglich und daher technisch nicht breit einsetzbar.

Eine Aufgabe der vorliegenden Erfindung war es daher, Verbindungen als Katalysatoren für die Hydrosilylierung bereitzustellen, die die Nachteile der bisher bekannten Katalysatoren nicht aufweisen.

Eine weitere Aufgabe der vorliegenden Erfindung war es, neue Mischungen bereitzustellen, die sich hydrosilylieren lassen.

Es wurde gefunden, dass kationische Germanium(II)-Verbindungen in Gegenwart von Sauerstoff Hydrosilylierungen katalysieren. Es wurde weiterhin festgestellt, dass kationische Germanium(II)-Verbindungen als Festkörper an Luft über mehrere Tage stabil sind. Dies ist überraschend, da die entsprechenden Silicium(II)-Verbindungen sehr rasch an Luft zersetzt werden. Dies stellt einen beträchtlichen technischen Vorteil der erfindungsgemäßen Germanium(II)-Verbindungen dar.

Einige Germanium(II)-Verbindungen mit anorganischen Anionen und ein Verfahren zu ihrer Herstellung sind bereits von Jutzi et al. in Organometallics 1986, 5, 730 beschrieben worden. **Cp*Ge⁺ BF₄⁻** wird durch Umsetzung von Pentamethylcyclopentadienylgermaniumchlorid mit HBF₄ bei - 80 °C in 54 % Ausbeute erhalten, **Cp*Ge⁺ AlCl₄⁻** wird durch Umsetzung von Pentamethylcyclopentadienylgermaniumchlorid mit Aluminiumtrichlorid in 42 % Ausbeute erhalten und **Cp*Ge⁺ GeCl₃⁻** wird durch Umsetzung von Pentamethylcyclopentadienylgermaniumchlorid mit Germaniumdichlorid-Dioxankomplex in 92 % Ausbeute erhalten. Diese Zugangswege sind jedoch sehr speziell und kationische Germanium(II)-Verbindungen mit organischem Anion sind auf diese Weise nicht zugänglich.

Franz X. Kohl et al: "Darstellung und Eigenschaften von Pentamethylcyclopentadienylgermanium-chlorid und pentamethylcyclopentadienylgermanium-trichlor-germanat", JOURNAL OF ORGANOMETALLIC CHEMISTRY, Bd. 243, Nr. 1, 1. Februar 1983 (1983-02-01), Seiten 31-34; Franz X. Kohl et al: "Azinkomplexe des (Pentamethylcyclopentadienyl)germanium- und -zinn-Kations", Chem. Ber, 1. Januar 1984 (1984-01-01), Seiten 1178-1193; sowie Peter Jutzi et al: "Mixed germylenes from (pentamethylcyclopentadienyl)germanium chloride and (pentamethylcyclopentadienyl)germanium tetrafluoroborate", ORGANOMETALLICS, Bd. 5, Nr. 10, 1. Oktober 1986 (1986-10-01), Seiten 1944-1948; beschreiben weitere Germanium(II)-Verbindungen mit anorganischen Anionen.

Eine allgemeine einfache Strategie, mit welcher eine breite Anzahl an verschiedenen Verbindungen, insbesondere solche mit einem organischen Anion, hergestellt werden kann, ist somit bislang nicht bekannt.

Es war somit eine weitere Aufgabe der vorliegenden Erfindung, ein Verfahren bereitzustellen, mit dem eine Vielzahl an kationischen Germanium(II)-Verbindungen auf einfachem Weg zugänglich ist.

Die genannten Aufgaben werden durch die Gegenstände der Patentansprüche gelöst.

Ein Gegenstand der vorliegenden Erfindung ist eine Mischung **M** enthaltend
(a) mindestens eine Verbindung **A,** die ausgewählt ist aus
   (a1) einer Verbindung der allgemeinen Formel **(I)**

      **R¹R²R³Si-H** **(I)**,

      worin die Reste **R¹, R²** und **R³** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei zwei der Reste **R¹, R²** und **R³** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C≡N,** - **OR^{z},** - **SR^{z},** - **NR^{z}₂,** - **PR^{z}₂,** - **O-CO-R^{z},** - **NH-CO-R^{z},** - **O-CO-OR^{z}** oder - **COOR^{z}** ersetzt sein, eine CH₂-Gruppe kann durch - **O** -, - **S** - oder - **NR^{z}** - ersetzt sein, und ein C-Atom kann durch ein Si-Atom ersetzt sein, worin R**^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und/oder
   (a2) einer Verbindung der allgemeinen Formel **(I')**

      **(SiO_{4/2})**ₐ**(R^{x}SiO_{3/2})**_{b}**(HSiO_{3/2})**_{b'}**(R^{x}₂SiO_{2/2})**_{c}**(R^{x}HSiO_{2/2})**_{c'}**(H₂SiO_{2/2})**_{c"}**(R^{x}₃S iO_{1/2})**_{d}**(HR^{x}₂SiO_{1/2})**_{d'}**(H₂R^{x}SiO_{1/2})**_{d"}**(H₃SiO_{1/2})**_{d"} **(I'),**

      worin die Reste **R^{x}** unabhängig voneinander ausgewählt werden aus der Gruppe bestehend aus (i) Halogen, (ii) unsubstituierter oder substituierter C₁-C₂₀-Kohlenwasserstoffrest, und (iii) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: Ein Wasserstoffatom kann durch Halogen ersetzt sein, eine CH₂-Gruppe kann durch - **O** - oder - **NR^{z}** - ersetzt sein, worin **R**^{z} jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest;
      und worin die Indices **a, b, b', c**, **c', c", d**, **d', d", d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d', d", d‴** zusammen mindestens den Wert 2 annimmt und wenigstens einer der Indices **b', c', c", d', d"** oder **d‴** ungleich 0 ist; und
(b) mindestens eine Verbindung **B,** die ausgewählt ist aus
   (b1) einer Verbindung der allgemeinen Formel **(II)**

      **R⁴R⁵C=CR⁶R⁷** **(II),**

      und/oder
   (b2) einer Verbindung der allgemeinen Formel **(II')**

      **R⁸C≡CR⁹** **(II'),**

      worin die Reste **R⁴, R⁵, R⁶, R⁷, R⁸** und **R⁹** unabhängig voneinander ausgewählt werden aus der Gruppe bestehend aus (i) Wasserstoff, (ii) - **C=N,** (iii) Organosiliciumrest mit 1 - 100.000 Siliciumatomen, (iv) unsubstituierter oder substituierter C₁-C₂₀-Kohlenwasserstoffrest, und (v) unsubstituierter oder substituierter C₁-C₂₀-Kohlenwasserstoffoxyrest, wobei zwei der Reste **R⁴, R⁵, R⁶** und **R⁷** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C=N,** - **OR^{z}, - SR^{z}**, - **NR^{z}₂,** - **PR^{z}₂,** - **O-CO-R^{z},** - **NH-CO-R^{z},** - **O-CO-OR^{z},** - **COOR^{z}** oder - **[O-(CH₂)ₙ]ₒ-(CH(O)CH₂)** mit **n** = 1 - 6 und **o** = 1 - 100 ersetzt sein, eine CH₂-Gruppe kann durch - **O** -, - **S** - oder - **NR^{z}** - ersetzt sein, und ein C-Atom kann durch ein Si-Atom ersetzt sein, worin **R^{z}** jeweils unabhängig voneinander ausgewählt wird aus der Gruppe bestehend aus Wasserstoff, C₁-C₆-Alkyl, C₆-C₁₄-Aryl, und C₂-C₆-Alkenyl; und/ oder
   (b3) einer Verbindung der allgemeinen Formel **(II")**

      **R^{x}₃Si-O[-SiR^{x}₂-O]ₘ-[Si(MB)R^{x}-O]ₙ-SiR^{x}₃** **(II"),**

      worin die Reste **R^{x}** unabhängig voneinander ausgewählt werden aus der Gruppe bestehend aus (i) Wasserstoff, (ii) Halogen, (iii) **MB,** (iv) unsubstituierter oder substituierter C₁-C₂₀-Kohlenwasserstoffrest, und (v) unsubstituierter oder substituierter C₁-C₂₀-Kohlenwasserstoffoxyrest;
      und worin **MB** jeweils unabhängig voneinander (i) - **(CH₂)ₒ-CR=CR₂** oder (ii) - **(CH₂)ₒ-C≡CR** bedeutet, mit **o** = 0 - 12 und worin **R** jeweils unabhängig voneinander ausgewählt wird aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C=N,** - **OR^{z}**, - **SR^{z},** - **NR^{z}₂,** - **PR^{z}₂,** - **O-CO-R^{z},** - **NH-CO-R^{z},** - **O-CO-OR^{z}** oder - **COOR^{z}** ersetzt sein, eine CH₂-Gruppe kann durch - **O** -, - **S** - oder - **NR^{z}** - ersetzt sein, und ein C-Atom kann durch ein Si-Atom ersetzt sein, worin R**^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest,
      und worin **m** und **n** unabhängig voneinander eine ganze Zahl im Bereich von 0 bis 100.000 bedeuten, mit der Maßgabe, dass in der Verbindung mindestens ein Rest **MB** enthalten ist; und
(c) mindestens eine Verbindung **C,** die ausgewählt ist aus kationischen Germanium(II)-Verbindungen der allgemeinen Formel **(III)**

   (**[Ge(II)Cp]⁺) X⁻** **(III),**

   worin **Cp** ein π-gebundener Cyclopentadienylrest der allgemeinen Formel (**IIIa**) ist 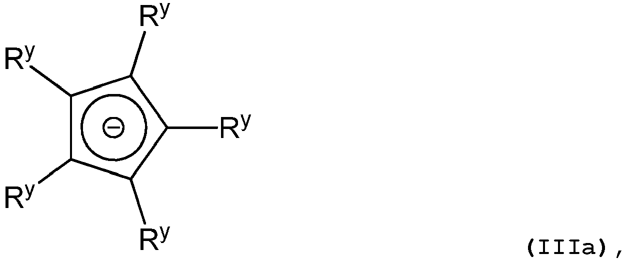
   worin die Reste **R^{y}** unabhängig voneinander ausgewählt werden aus der Gruppe bestehend aus (i) Triorganosilylrest der Formel - **SiR^{b}₃,** worin die Reste **R^{b}** unabhängig voneinander C₁-C₂₀-Kohlenwasserstoffrest bedeuten, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei auch jeweils zwei Reste **R^{y}** miteinander einen monocyclischen oder polycyclischen C₂-C₂₀-Kohlenwasserstoffrest bilden können, und wobei substituiert jeweils meint, dass im Kohlenwasserstoff- oder Kohlenwasserstoffoxyrest auch mindestens ein C-Atom durch ein Si-Atom ersetzt sein kann, und die Anionen **X-** ausgewählt werden aus der Gruppe bestehend aus den Verbindungen der Formel **[B(R^{a})₄]⁻,** worin die Reste **R^{a}** unabhängig voneinander ausgewählt werden aus aromatischer C₆-C₁₄-Kohlenwasserstoffrest, bei dem alle Wasserstoffatome unabhängig voneinander durch einen Rest, ausgewählt aus der Gruppe bestehend aus (i) Fluor und (ii) Triorganosilylrest der Formel - **SiR^{b}₃,** worin die Reste **R^{b}** unabhängig voneinander C₁-C₂₀-Alkylrest bedeuten, substituiert sind.

### Verbindung A

In der Mischung **M** ist mindestens eine Verbindung **A** enthalten, womit auch Mischungen von Verbindungen der allgemeinen Formel **(I)** und/oder Mischungen von Verbindungen der allgemeinen Formel (**I'**) umfasst sind.

Bevorzugt werden in Formel **(I)** die Reste **R¹, R²** und **R³** unabhängig voneinander ausgewählt aus der Gruppe bestehend aus (i) Wasserstoff, (ii) Chlor, (iii) unsubstituierter oder substituierter C₁-C₁₂-Kohlenwasserstoffrest, und (iv) unsubstituierter oder substituierter C₁-C₁₂-Kohlenwasserstoffoxyrest, wobei substituiert dieselbe Bedeutung wie zuvor hat; und bevorzugt werden in Formel **(I')** die Reste **R^{x}** unabhängig voneinander ausgewählt aus der Gruppe bestehend aus Chlor, C₁-C₆-Alkylrest, C₂-C₆-Alkenylrest, Phenyl, und C₁-C₆-Alkoxyrest, und die Indices **a, b, b', c, c', c", d, d'**, **d", d‴** werden unabhängig voneinander ausgewählt aus einer ganzen Zahl im Bereich von 0 bis 1.000.

Besonders bevorzugt werden in Formel **(I)** die Reste **R¹, R²** und **R³** unabhängig voneinander ausgewählt aus der Gruppe bestehend aus (i) Wasserstoff, (ii) Chlor, (iii) C₁-C₆-Alkylrest, (iv) C₂-C₆-Alkenylrest, (v) Phenyl, und (vi) C₁-C₆-Alkoxyrest; und besonders bevorzugt werden in Formel **(I')** die Reste **R^{x}** unabhängig voneinander ausgewählt aus der Gruppe bestehend aus Chlor, Methyl, Methoxy, Ethyl, Ethoxy, n-Propyl, n-Propoxy, und Phenyl, und die Indices **a, b, b', c, c', c", d, d', d", d‴** werden unabhängig voneinander ausgewählt aus einer ganzen Zahl im Bereich von 0 bis 1.000.

Ganz besonders bevorzugt werden in Formel **(I)** die Reste **R¹, R²** und **R³** und in Formel **(I')** die Reste **R^{x}** unabhängig voneinander ausgewählt aus der Gruppe bestehend aus Wasserstoff, Chlor, Methyl, Methoxy, Ethyl, Ethoxy, n-Propyl, n-Propoxy, und Phenyl, und die Indices **a, b, b', c, c', c", d, d', d", d‴** werden bevorzugt unabhängig voneinander ausgewählt aus einer ganzen Zahl im Bereich von 0 bis 1.000.

Eine Mischung von Verbindungen der Formel **(I')** liegt insbesondere bei Polysiloxanen vor. Der Einfachheit halber werden für Polysiloxane jedoch nicht die einzelnen Verbindungen der Mischung angegeben, sondern es wird eine der Formel (**I'**) ähnliche mittlere Formel **(I'a)** angegeben:

**(SiO_{4/2})**ₐ**(R^{x}SiO_{3/2})**_{b}**(HSiO_{3/2})**_{b'}**(R^{x}₂SiO_{2/2})**_{c}**(R^{x}HSiO_{2/2})**_{c'}**(H₂SiO_{2/2})**_{c"}**(R^{x}₃S iO_{1/2})**_{d}**(HR^{x}₂SiO_{1/2})**_{d'}**(H₂R^{x}SiO_{1/2})**_{d"}**(H₃SiO_{1/2})**_{d‴} **(I'a)**,

worin die Reste **R^{x}** dieselbe Bedeutung wie in Formel **(I')** haben, die Indices **a, b, b', c, c', c", d, d', d", d‴** jedoch unabhängig voneinander eine Zahl im Bereich von 0 bis 100.000 bedeuten und den mittleren Gehalt der jeweiligen Siloxaneinheit in der Mischung angeben. Bevorzugt werden solche Mischungen der mittleren Formel **(I'a),** worin die Indices **a, b, b', c, c', c", d, d', d", d‴** unabhängig voneinander ausgewählt werden aus einer Zahl im Bereich von 0 bis 20.000.

Beispiele für Verbindungen **A** der allgemeinen Formel **(I)** sind die folgenden Silane (Ph = Phenyl, Me = Methyl, Et = Ethyl): **Me₃SiH, Et₃SiH, Me₂PhSiH, MePh₂SiH, Me₂ClSiH, Et₂ClSiH, MeCl₂SiH, Cl₃SiH, Me₂(MeO)SiH, Me(MeO)₂SiH, (MeO)₃SiH, Me₂(EtO)SiH, Me(EtO)₂SiH, (EtO)₃SiH;** und Beispiele für Verbindungen **A der** allgemeinen Formel **(I')** sind die folgenden Siloxane und Polysiloxane:
**HSiMe₂-O-SiMe₂H, Me₃Si-O-SiHMe₂, Me₃Si-O-SiHMe-O-SiMe₃, H-SiMe₂-(O-SiMe₂)ₘ-O-SiMe₂-H,** worin **m** eine Zahl im Bereich von 1 bis 20.000 ist,
**Me₃Si-O-(SiMe₂-O)ₙ(SiHMe-O)ₒ-SiMe₃,** worin **n** und **o** unabhängig voneinander eine Zahl im Bereich von 1 bis 20.000 sind.

### Verbindung B

In der Mischung **M** ist mindestens eine Verbindung **B** enthalten, womit auch Mischungen von Verbindungen der allgemeinen Formel **(II)** und/oder Mischungen von Verbindungen der allgemeinen Formel **(II')** und/oder Mischungen von Verbindungen der allgemeinen Formel **(II")** umfasst sind.

Organosiliciumrest in Formel **(II')** bedeutet eine Verbindung mit mindestens einer direkten Si-C-Bindung im Molekül.

Bevorzugt werden in den Formeln **(II)** und **(II')** die Reste **R⁴**, **R⁵, R⁶, R⁷, R⁸** und **R⁹** unabhängig voneinander ausgewählt aus der Gruppe bestehend aus (i) Wasserstoff, (ii) - **C=N,** (iii) unsubstituierter oder substituierter C₁-C₁₂-Kohlenwasserstoffrest, (iv) unsubstituierter oder substituierter C₁-C₁₂-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C=N,** C₁-C₆-Al-koxy, - **NR^{z}₂,** - **O-CO-R^{z},** - **NH-CO-R^{z},** - **O-CO-OR^{z},** - **COOR^{z}** oder - **[O-(CH₂)ₙ]ₒ-(CH(O)CH₂)** mit **n** = 1 - 3 und **o** = 1 - 20 ersetzt sein, worin **R**^{z} jeweils unabhängig voneinander ausgewählt wird aus der Gruppe bestehend aus Wasserstoff, Chlor, C₁-C₆-Alkyl, C₂-C₆-Alkenyl, und Phenyl; und (v) Organosiliciumrest ausgewählt aus der allgemeinen Formel **(IIa),**

- **(CH₂)ₙ-SiR^{x}₃** **(II3)**,

worin die Reste **R^{x}** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: Ein Wasserstoffatom kann durch Halogen ersetzt sein, eine CH₂-Gruppe kann durch - **O** - oder - **NR^{z}** - ersetzt sein,
worin **R^{z}** ausgewählt wird aus der Gruppe bestehend aus Wasserstoff, C₁-C₆-Alkyl, C₆-C₁₄-Aryl, und C₂-C₆-Alkenyl;
und worin **n** = 0 - 12 bedeutet;
und bevorzugt werden in Formel **(II")** die Reste **R^{x}** unabhängig voneinander ausgewählt aus der Gruppe bestehend aus (i) Wasserstoff, (ii) Chlor, (iii) C₁-C₆-Alkylrest, (iv) Phenyl, (v) **MB** und (vi) C₁-C₆-Alkoxyrest, wobei **MB** jeweils unabhängig voneinander (i) - **(CH₂)ₒ-CR=CR₂** oder (ii) - **(CH₂)ₒ-C≡CR** bedeutet, mit **o** = 0 - 6 und worin **R** jeweils unabhängig voneinander ausgewählt wird aus der Gruppe bestehend aus (i) Wasserstoff, (ii) Chlor, (iii) C₁-C₆-Alkylrest, (iv) Phenyl, und (v) C₁-C₆-Alkoxyrest.

Besonders bevorzugt werden in den Formeln **(II)** und **(II')** die Reste **R⁴, R⁵, R⁶, R⁷, R⁸** und **R⁹** unabhängig voneinander ausgewählt aus der Gruppe bestehend aus (i) Wasserstoff, (ii) - **C=N,** (iii) Organosiliciumrest ausgewählt aus der allgemeinen Formel **(IIa),** worin die Reste **R^{x}** unabhängig voneinander ausgewählt werden aus der Gruppe bestehend aus Wasserstoff, Chlor, C₁-C₆-Alkylrest, C₂-C₆-Alkenylrest, Phenyl und C₁-C₆-Alkoxyrest; (iv) unsubstituierter oder substituierter C₁-C₆-Kohlenwasserstoffrest, und (v) unsubstituierter oder substituierter C₁-C₆-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Chlor, - **C=N,** - **O-CH₂**-**(CH(O)CH₂)** (=Glycidoxyrest), - **NR^{z}₂** und - **O-CO-R^{z}** ersetzt sein, wobei **R^{z}** jeweils unabhängig voneinander ausgewählt wird aus der Gruppe bestehend aus Wasserstoff und C₁-C₆-Alkyl;
und besonders bevorzugt werden in Formel **(II")** die Reste **R^{x}** unabhängig voneinander ausgewählt aus der Gruppe bestehend aus C₁-C₃-Alkylrest und **MB,** wobei **MB** jeweils bedeutet - **(CH₂)ₒ**-**CR=CR₂,** worin **R** jeweils Wasserstoff ist und **o** = 0 - 6 bedeutet.

Beispiele für Verbindungen der Formel (**II"**) sind

**R^{x}₃Si-O[-SiR^{x}₂-O]ₘ-[Si(MB)₂-O]_{1-100.000}-SiR^{x}₃,**

**R^{x}₃Si-O[-SiR^{x}₂-O]ₘ-[Si(MB)R^{x}-O]_{1-100.000}-SiR^{x}₃,**

**(MB)R^{x}₂Si-O[-SiR^{x}₂-O]**ₘ-**[Si(MB)R^{x}-O]ₙ-SiR^{x}₃,**

**(MB)R^{x}₂Si-O[-SiR^{x}₂-O]**ₘ-**[Si(MB)₂-O]ₙ-SiR^{x}₃,**

**(MB)R^{x}₂Si-O[-SiR^{x}₂-O]**ₘ-**[Si(MB)R^{x}-O]ₙ-SiR^{x}₂(MB)**,

**(MB)R^{x}₂Si-O[-SiR^{x}₂-O]**ₘ-**[Si(MB)₂-O]ₙ-SiR^{x}₂(MB)**,

worin **MB** jeweils unabhängig voneinander (i) - **(CH₂)ₒ-CR=CR₂** oder (ii) - **(CH₂)ₒ-C≡CR** bedeutet, mit **o** = 0 - 12 und worin **R^{x}, m** und **n** dieselbe Bedeutung wie in Formel **(II")** haben.

Beispiele für Verbindungen **B** sind Ethylen, Propylen, 1-Butylen, 2-Butylen, Isopren, 1,5-Hexadien, Cyclohexen, Dodecen, Cyclohepten, Norbornen, Norbornadien, Inden, Cyclooctadien, Styrol, α-Methylstyrol, 1,1-Diphenylethylen, cis-Stilben, trans-Stilben, 1,4-Divinylbenzol, Allylbenzol,
Allylchlorid, Allylamin, Dimethylallylamin, Acrylnitril, Allylglycidylether, Vinylacetat,
Vinyl-Si(CH₃)₂OMe, Vinyl-SiCH₃(OMe)₂, Vinyl-Si(OMe)₃, Vinyl-Si(CH₃)₂-O-[Si(CH₃)₂-O]ₙ-Si(CH₃)₂-Vinyl mit **n** = 0 bis 10.000,
Me₃Si-O-(SiMe₂-O)ₙ-[Si(Vinyl)Me-O]ₒ-SiMe₃ mit **n** = 1 bis 20.000 und **o** = 1 bis 20.000,
Acetylen, Propin, 1-Butin, 2-Butin und Phenylacetylen.

In einer besonderen Ausführungsform liegen die Verbindung **A** und die Verbindung **B** in einem Molekül vor. Beispiele solcher Moleküle sind Vinyldimethylsilan, Allyldimethylsilan, Vinylmethylchlorsilan und Vinyldichlorsilan.

### Verbindung C

Beispiele für Reste **R^{y}** in Formel **(III)** sind Alkylreste, wie der Methyl-, Ethyl-, n-Propyl-, iso-Propyl-, n-Butyl-, sec-Butyl-, iso-Butyl-, tert.-Butyl-, n-Pentyl-, sec-Pentyl, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,4,4-Trimethylpentylrest; Nonylreste, wie der n-Nonylrest; Decylreste, wie der n-Decylrest; Dodecylreste, wie der n-Dodecylrest; Hexadecylreste, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest; Arylreste, wie der Phenyl-, Naphthyl-, Anthracen- und Phenanthrenrest; Alkarylreste, wie der o-, m- und p-Tolyl-, Xylyl-, Mesitylenyl- und o-, m- und p-Ethylphenylrest; Alkarylreste, wie der Benzylrest, der α- und der β-Phenylethylrest; und Alkylsilylreste wie Trimethylsilyl, Triethylsilyl, Tripropylsilyl, Dimethylethylsilyl, Dimethyl-tert-butylsilyl und Diethylmethylsilylrest.

Bevorzugt werden in Formel **(III)** die Reste **R^{y}** unabhängig voneinander ausgewählt aus der Gruppe bestehend aus (i) C₁-C₃-Alkylrest, (ii) Wasserstoff und (iii) Triorganosilylrest der Formel - **SiR^{b}₃,** worin die Reste **R^{b}** unabhängig voneinander C₁-C₂₀-Alkylrest bedeuten. Besonders bevorzugt werden die Reste **R^{y}** unabhängig voneinander ausgewählt aus Methylrest und Trimethylsilylrest. Ganz besonders bevorzugt sind alle Reste **R^{y}** ein Methylrest.

Ganz besonders bevorzugt werden in Formel **(III)** die Anionen **X-**ausgewählt aus der Gruppe bestehend aus den Verbindungen der Formel **[B(R^{a})₄]⁻,** worin die Reste **R^{a}** unabhängig voneinander ausgewählt werden aus der Gruppe bestehend aus - **C₆F₅,** perfluorierter 1- und 2-Naphthylrest, - **C₆F₃(SiRb₃)₂** und - **C₆F₄(SiR^{b}₃)**, worin die Reste **R^{b}** jeweils unabhängig voneinander C₁-C₂₀-Alkylrest bedeuten.

Am meisten bevorzugt werden in Formel **(III)** die Anionen **X-**ausgewählt aus der Gruppe bestehend aus **[B(C₆F₅)₄]⁻, [B(C₆F₄(4-TBS)₄]⁻** mit TBS = SiMe₂*tert*-Butyl, **[B(2-NaphF)_{4]}⁻** mit 2-NaphF = perfluorierter 2-Naphthylrest und **[B(C₆F₅)₃(2-NaphF)]⁻** mit 2-NaphF = perfluorierter 2-Naphthylrest.

Bevorzugte Verbindungen der Formel **(III)** sind solche, in denen alle Reste **R^{y}** Methyl bedeuten und die Anionen **X-** ausgewählt werden aus der Gruppe bestehend aus den Verbindungen der Formeln **[B(R^{a})_{4]}⁻,** worin die Reste **R^{a}** unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel - **SiR^{b}₃,** worin die Reste **R^{b}** unabhängig voneinander C₁-C₂₀-Alkylrest bedeuten, substituiert ist.

Besonders bevorzugt werden die Verbindungen der Formel **(III)** ausgewählt aus der Gruppe bestehend aus **Cp*Ge⁺ B(C₆F₅)₄⁻; Cp*Ge⁺ B[C₆F₄(4-TBS)]₄⁻,** mit TBS = **SiMe₂*tert*-Butyl;**
**Cp*Ge⁺ B(2-NaphF)₄⁻,** mit 2-NaphF = perfluorierter 2-Naphthylrest; und
**Cp*Ge⁺ B[(C₆F₅)₃(2-NaphF)]⁻,** mit 2-NaphF = perfluorierter 2-Naphthylrest.

Die erfindungsgemäße Mischung **M** kann beliebige weitere Verbindungen wie z.B. Prozesshilfsstoffe, z.B. Emulgatoren, Füllstoffe, z.B. hochdisperse Kieselsäure oder Quarz, Stabilisatoren, z.B. Radikalinhibitoren, Pigmente, z.B. Farbstoffe oder Weißpigmente, z.B. Kreide oder Titandioxid enthalten. Bevorzugt liegen die Mengen der weiteren Verbindungen zwischen 0,1 Gew.-% und 95 Gew.-%, besonders bevorzugt zwischen 1 Gew.-% und 80 Gew.-%, ganz besonders bevorzugt zwischen 5 Gew.-% und 30 Gew.-%, jeweils bezogen auf das Gesamtgewicht der Mischung **M.**

Ein weiterer Gegenstand der Erfindung ist ein Verfahren zur Hydrosilylierung der erfindungsgemäßen Mischung **M,** wobei mindestens eine Verbindung **A** mit mindestens einer Verbindung **B** in Gegenwart von mindestens einer Verbindungen **C** und in Gegenwart von Sauerstoff umgesetzt wird.

Die Sauerstoffmenge ist bei der Hydrosilylierung nicht wesentlich, jedes dem Fachmann bekannte Sauerstoff-haltige Gasgemisch, wie z.B. Umgebungsluft, Magerluft, etc. kann verwendet werden. Bevorzugt stammt der Sauerstoff aus einem Sauerstoffhaltigen Gasgemisch mit einem Anteil an Sauerstoff von 0,1 - 100 Vol.-%.

Es ist ferner nicht wesentlich, wann und wie der Sauerstoff zugegeben wird. Das Sauerstoff-haltige Gas kann z.B. einmalig in den Gasraum gegeben werden, oder es kann kontinuierlich eingeleitet werden, oder es kann, vor dessen Zugabe, über die kationische Germanium(II)-Verbindung geleitet oder in eine Lösung der kationischen Germanium(II)-Verbindung eingeleitet werden oder es kann über sonstige dem Fachmann bekannte Verfahren mit der Reaktionsmischung in Kontakt gebracht werden.

Die Reaktanden können in beliebiger Reihenfolge miteinander vermischt werden, wobei das Vermischen in einer dem Fachmann bekannten Weise erfolgt. Beispielsweise können die Verbindungen **A, B** und **C** vermischt werden, so dass die Hydrosilylierung durch Kontakt mit Sauerstoff ausgelöst wird. Ebenso ist es möglich, zunächst die Verbindungen **A** und **B** oder **A** und **C** oder **B** und **C** zu mischen, und dann die noch fehlende Verbindung hinzuzufügen.

In einer besonderen Ausführungsform wird die Hydrosilylierung der erfindungsgemäßen Mischung aus den Verbindungen **A, B** und **C** unter Luft-, Magerluft- oder Sauerstoffatmosphäre durchgeführt.

In einer weiteren besonderen Ausführungsform wird eine Lösung der Verbindung **C** mit Sauerstoff in Kontakt gebracht und zu einem späteren Zeitpunkt mit der Verbindung **A** und Verbindung **B** vermischt.

Das molare Verhältnis der Verbindungen **A** und **B** liegt bezogen auf die vorhandenen Si-H-Gruppen bzw. die ungesättigten Kohlenstoffgruppierungen üblicherweise im Bereich von 1:10 bis 10:1, bevorzugt liegt das molare Verhältnis im Bereich von 1:5 bis 5:1, besonders bevorzugt im Bereich 1:2 bis 2:1.

Das molare Verhältnis zwischen der Verbindung **C** und den in der Verbindung **A** vorhandenen Si-H-Gruppen liegt üblicherweise im Bereich von 1:10⁷ bis 1:1, bevorzugt im Bereich von 1:10⁶ bis 1:10, besonders bevorzugt im Bereich von 1:10⁵ bis 1:500.

Die Hydrosilylierung kann ohne Lösemittel oder mit Zusatz eines oder mehrerer Lösemittel durchgeführt werden. Der Anteil des Lösemittels oder des Lösemittelgemisches liegt bezogen auf die Summe der Verbindungen **A** und **B** bevorzugt im Bereich von 0,1 Gew.-% bis zur 1000-fachen Gewichtsmenge, besonders bevorzugt im Bereich von 10 Gew.-% bis zur 100-fachen Gewichtsmenge, ganz besonders bevorzugt im Bereich von 30 Gew.-% bis zur 10-fachen Gewichtsmenge.

Als Lösemittel können bevorzugt aprotische Lösemittel, beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-tert.-butylether, Anisol, Tetrahydrofuran oder Dioxan, oder Nitrile wie z.B. Acetonitril oder Propionitril, eingesetzt werden.

Der Druck bei der Hydrosilylierung kann vom Fachmann frei gewählt werden, sie kann unter Umgebungsdruck oder unter vermindertem oder unter erhöhtem Druck durchgeführt werden.

Der Druck liegt bevorzugt in einem Bereich von 0,01 bar bis 100 bar, besonders bevorzugt in einem Bereich von 0,1 bar bis 10 bar, ganz besonders bevorzugt wird die Hydrosilylierung bei Umgebungsdruck durchgeführt. Sind jedoch an der Hydrosilylierung Verbindungen beteiligt, die bei der Reaktionstemperatur gasförmig vorliegen, erfolgt bevorzugt eine Umsetzung unter erhöhtem Druck, besonders bevorzugt bei dem Dampfdruck des Gesamtsystems.

Der Fachmann kann die Temperatur der Hydrosilylierung frei wählen. Die Hydrosilylierung erfolgt üblicherweise bei einer Temperatur im Bereich von - 100 °C bis + 250 °C, bevorzugt im Bereich von - 20 °C bis + 150 °C, besonders bevorzugt im Bereich von 0 °C bis 100°C.

Ein weiterer Gegenstand der Erfindung sind kationische Germanium(II)-Verbindungen der Formel **(IV)**

**[Cp*Ge]**⁺ **[B(R^{a})₄]⁻** **(IV),**

worin **Cp*** ein π-gebundener Pentamethylcyclopentadienylrest ist, und die Reste **R^{a}** jeweils unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel - **SiR^{b}₃,** worin die Reste **R^{b}** unabhängig voneinander C₁-C₂₀-Alkylrest bedeuten, substituiert ist.

Beispiele für Reste **R^{a}** in Formel **(IV)** sind m-Difluorphenylrest, 2,2,4,4-Tetrafluorphenylrest, perfluorierter 1-Naphthylrest, perfluorierter 2-Naphthylrest, Perfluorbiphenylrest, - **C₆F₅,** - **C₆H₃(m-CF₃)₂,** - **C₆H₄(p-CF₃),** - **C₆H₂(2,4,6-CF₃)₃,** - **C₆F₃(m-SiMe₃)**₂, - **C₆F₄(p-SiMe₃)**, - **C₆F₄(p-SiMe₂t-butyl)**.

Bevorzugt werden in Formel **(IV)** die Reste **R^{a}** jeweils unabhängig voneinander ausgewählt aus aromatischer C₆-C₁₄-Kohlenwasserstoffrest, bei dem alle Wasserstoffatome unabhängig voneinander durch einen Rest ausgewählt aus der Gruppe bestehend aus (i) Fluor und (ii) Triorganosilylrest der Formel - **SiR^{b}₃,** worin die Reste **R^{b}** unabhängig voneinander C₁-C₂₀-Alkylrest bedeuten, substituiert sind.

Ganz besonders bevorzugt werden in Formel **(IV)** die Reste **R^{a}** unabhängig voneinander ausgewählt aus der Gruppe bestehend aus - **C₆F₅,** perfluorierter 1- und 2-Naphthylrest, - **C₆F₃(SiR^{b}₃)₂** und - **C₆F₄(SiR^{b}₃),** worin die Reste **R^{b}** jeweils unabhängig voneinander C₁-C₆-Alkylrest bedeuten.

Am meisten bevorzugt werden in Formel **(IV)** die Reste **R^{a}** unabhängig voneinander ausgewählt aus der Gruppe bestehend aus - **C₆F₅,** perfluorierter 2-Naphthylrest und - **C₆F₄(4-SiMe₂*tert-*Butyl)**.

Bevorzugte Verbindungen der Formel **(IV)** sind:

**Cp*Ge⁺ B(C₆F₅)₄⁻;**

**Cp*Ge⁺ B[C₆F₄(4-TBS)]₄⁻,** mit TBS = **SiMe₂*tert*-Butyl;**
**Cp*Ge⁺ B(2-NaphF)₄⁻,** mit 2-NaphF = perfluorierter 2-Naphthylrest; und
**Cp*Ge⁺ B[(C₆F₅)₃(2-NaphF)]⁻**, mit 2-NaphF = perfluorierter 2-Naphthylrest.

Ein weiterer Gegenstand der Erfindung ist ein Verfahren zur Herstellung von kationischen Germanium(II)-Verbindungen der allgemeinen Formel **(III)**

**([Ge(II)Cp]⁺) X⁻** **(III),**

wobei
(a) eine Verbindung der allgemeinen Formel **(V)**

   **[Cp₂Ge(II)]** **(V),**

   worin die Reste **Cp** unabhängig voneinander einen π-gebundenen Cyclopentadienylrest der allgemeinen Formel **(Va)** bedeuten 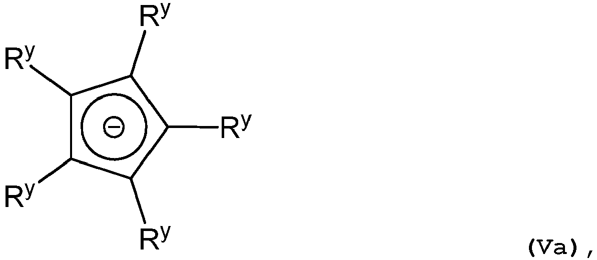
   worin die Reste **R^{y}** unabhängig voneinander ausgewählt werden aus der Gruppe bestehend aus (i) Triorganosilylrest der Formel - **SiR^{b}₃,** worin die Reste **R^{b}** unabhängig voneinander C₁-C₂₀-Alkylrest bedeuten, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei auch jeweils zwei Reste **R^{y}** miteinander einen monocyclischen oder polycyclischen C₂-C₂₀-Kohlenwasserstoffrest bilden können, und wobei substituiert jeweils meint, dass im Kohlenwasserstoff- oder Kohlenwasserstoffoxyrest auch mindestens ein C-Atom durch ein Si-Atom ersetzt sein kann, mit der Maßgabe, dass bei mindestens einem Cp-Rest mindestens ein Rest **R^{y}** eine Gruppe - **CHR¹R²** ist, worin **R¹** und **R²** unabhängig voneinander ausgewählt werden aus der Gruppe bestehend aus (i) Wasserstoff, (ii) C₁-C₁₉-Alkylrest und (iii) C₆-C₁₉-Arylrest;
   mit
(b) einer carbokationischen Verbindung der allgemeinen Formel **(VI)**

   **(R^{d}₃C⁺) X⁻** **(VI),**

   worin die Reste **R^{d}** unabhängig voneinander ausgewählt werden aus unsubstituierter oder substituierter, aromatischer C₆-C₁₄-Kohlenwasserstoffrest, wobei substituiert meint, dass der Kohlenwasserstoffrest unabhängig voneinander mindestens eine der folgenden Substitutionen aufweist: ein Wasserstoffatom kann durch Halogen oder C₁-C₆-Alkylrest ersetzt sein;
   umgesetzt wird.

Ganz besonders bevorzugt werden in Formel **(VI)** die Anionen **X-**ausgewählt aus der Gruppe bestehend aus Verbindungen der Formel **[B(R^{a})₄]⁻,** worin die Reste **R^{a}** unabhängig voneinander ausgewählt werden aus der Gruppe bestehend aus - **C₆F₅,** perfluorierter 1- oder 2-Naphthylrest, - **CeF₃(SiR^{b}₃)₂** und - **C₆F₄(SiR^{b}₃)**, worin die Reste **R^{b}** unabhängig voneinander C₁-C₂₀-Alkylrest bedeuten.

Am meisten bevorzugt werden in Formel **(VI)** die Anionen **X-** ausgewählt aus der Gruppe bestehend aus **[B(C₆F₅)₄]⁻**, **[B(C₆F₄(4-TBS)₄]⁻** mit TBS = SiMe₂*tert*-Butyl, **[B(2-NaphF)₄]⁻** mit 2-NaphF = perfluorierter 2-Naphthylrest und **[B(C₆F₅)₃(2-NaphF)]⁻** mit 2-NaphF = perfluorierter 2-Naphthylrest.

Bevorzugt werden in Formel **(VI)** die Reste **R^{d}** unabhängig voneinander ausgewählt aus der Gruppe bestehend aus unsubstituierter oder mit Halogenatomen substituierter Phenyl-, Tolyl-, Xylyl, Mesitylenyl- und Ethylphenylrest.

Besonders bevorzugt werden in Formel **(VI)** die Reste **R^{d}** unabhängig voneinander ausgewählt aus der Gruppe bestehend aus Phenyl-, Pentafluorphenyl-, Pentachlorphenyl-, o-Tolyl-, m-Tolyl, p-Tolyl-, Xylyl-, Mesitylenyl-, m-Ethylphenyl-, o-Ethylphenyl- und p-Ethylphenylrest.

Bevorzugte Verbindungen der Formel **(VI)** sind solche, bei denen alle Reste **R^{d}** Phenyl bedeuten und die Anionen **X⁻** ausgewählt werden aus der Gruppe bestehend aus Verbindungen der Formel **[B(R^{a})₄]⁻,** worin die Reste **R^{a}** unabhängig voneinander ausgewählt werden aus der Gruppe bestehend aus - **C₆F₅,** perfluorierter Naphthylrest und - **C₆F₄(SiR^{b}₃),** worin die Reste **R^{b}** unabhängig voneinander C₁-C₂₀-Alkylrest bedeuten.

Beispiele für Verbindungen der Formel **(V)** sind:
Decamethylgermanocen, Decaisopropylgermanocen, und Octamethylbis(trimethylsilyl)germanocen,
Bis[(trimethylsilyl)cyclopentadienyl)]germanium,
Bis[bis(trimethylsilyl)cyclopentadienyl]germanium,
Bis[tris(trimethylsilyl]cyclopentadienyl]germanium.

Beispiele für Verbindungen der Formel **(VI)** sind:

**(C₆H₅)₃C⁺ B(C₆F₅)₄⁻;**

**(C₆H₅)₃C⁺ B[C₆F₄(4-TBS)]₄⁻,** mit TBS = **SiMe₂*tert*-Butyl;**
**(C₆H₅)₃C⁺ B(2-NaphF)₄⁻,** mit 2-NaphF = perfluorierter 2-Naphthylrest; und
**(C₆H₅)₃C⁺ B[(C₆F₅)₃(2-NaphF)]⁻,** mit 2-NaphF = perfluorierter 2-Naphthylrest.

Das molare Verhältnis der Verbindung der allgemeinen Formel **(V)** und der carbokationischen Verbindung der allgemeinen Formel **(VI)** beträgt bevorzugt mindestens 1:10 und höchstens 10:1, besonders bevorzugt mindestens 1:5 und höchstens 5:1, ganz besonders bevorzugt mindestens 1:3 und höchstens 3:1. Die beiden Komponenten können dabei in beliebiger Reihenfolge vermischt werden, wobei das Vermischen in einer dem Fachmann bekannten Weise erfolgt. Bevorzugt wird die Verbindung der allgemeinen Formel **(V)** mit der carbokationischen Verbindung der allgemeinen Formel **(VI)** versetzt.

Die Umsetzung kann in Gegenwart einer oder mehrerer weiterer Komponenten durchgeführt werden, beispielsweise in Gegenwart eines Lösemittels oder eines Gemischs aus mehreren Lösemitteln. Es kann entweder die Verbindung der allgemeinen Formel **(V)** oder die carbokationische Verbindung der allgemeinen Formel **(VI)** oder es können beide Komponenten in einem Lösemittel oder in einem Lösemittelgemisch gelöst werden. Der Anteil des Lösemittels oder des Lösemittelgemisches beträgt bezogen auf die Summe der Verbindungen der allgemeinen Formel **(V)** und **(VI)** bevorzugt mindestens 0,1 Gew.-% und höchstens die 1000-fache Gewichtsmenge, besonders bevorzugt mindestens 10 Gew.-% und höchstens die 100-fache Gewichtsmenge, ganz besonders bevorzugt mindestens 30 Gew.-% und höchstens die 10-fache Gewichtsmenge.

Als Lösemittel können beispielsweise Kohlenwasserstoffe wie Pentan, Hexan, Heptan, Cyclohexan oder Toluol, Chlorkohlenwasserstoffe wie Dichlormethan, Chloroform, Chlorbenzol oder 1,2-Dichlorethan, Ether wie Diethylether, Methyl-tert.-butylether, Anisol, Tetrahydrofuran oder Dioxan, oder Nitrile wie z.B. Acetonitril oder Propionitril, eingesetzt werden.

Der Druck bei der Umsetzung kann vom Fachmann frei gewählt werden, sie kann unter Umgebungsdruck oder unter vermindertem oder unter erhöhtem Druck durchgeführt werden. Der Druck beträgt bevorzugt mindestens 0,01 bar und höchstens 100 bar, besonders bevorzugt mindestens 0,1 bar und höchstens 10 bar, ganz besonders bevorzugt wird die Umsetzung bei Umgebungsdruck durchgeführt.

Der Fachmann kann die Temperatur bei der Umsetzung frei wählen. Die Umsetzung erfolgt üblicherweise bei Temperaturen im Bereich von - 100 °C bis + 250 °C, bevorzugt im Bereich von - 20 °C bis + 150 °C, besonders bevorzugt im Bereich von 0 °C bis + 100 °C.

In einer besonderen Ausführungsform wird die kationische Germanium(II)-Verbindungen der allgemeinen Formel **(III)** in situ in Verbindung **A** oder in Verbindung **B** oder im Gemisch der beiden Verbindungen **A** und **B** erzeugt.

Auf diese Weise kann auf die Isolierung der kationischen Germanium(II)-Verbindung verzichtet werden. Für eine Hydrosilylierungsreaktion bedeutet das eine Verringerung der Reaktionsstufen, denn die Umsetzung der Verbindung **A** mit der Verbindung **B** setzt direkt mit Entstehung der kationischen Germanium(II)-Verbindung ein, vorausgesetzt es ist Sauerstoff anwesend.

Ein weiterer Gegenstand der Erfindung ist ein Katalysatorsystem enthaltend mindestens eine kationische Germanium(II)-Verbindung der allgemeinen Formel **(III)** und Sauerstoff.

Ein weiterer Gegenstand der Erfindung ist die Verwendung der kationischen Germanium(II)-Verbindungen gemäß Formel **(III)** als Katalysator, insbesondere als Katalysator für Hydrosilylierungen.

Besonders bevorzugt ist die Verwendung der kationischen Germanium(II)-Verbindungen gemäß Formel **(IV)** als Katalysator.

### Beispiele

Die folgenden Trityliumsalze wurden analog zu folgenden Literaturangaben hergestellt:
(C₆H₅)₃C⁺ B[C₆F₄(4-TBS)]₄⁻, TBS = SiMe₂*tert*-Butyl: Marks et al., Organometallics 1997, 16, 842-857).
Decamethylgermanocen: Weidenbruch et al., J. Organomet. Chem. 2006, 691, 809-810.
(C₆H₅)₃C⁺ B(Naph^{F})₄⁻ und (C₆H₅)₃C⁺ B[(C₆F₄)₃(Naph)]⁻ mit Naph^{F} = Perfluor-β-naphthyl: Mathur und Strickler, US 2015/0259362 (2017); Berris, WO2007/070770 (2007).

### Vergleichsbeispiel 1 unter Ausschluss von Sauerstoff - nicht erfindungsgemäß

Alle Schritte wurden unter Argon ausgeführt. 2,0 mg (2,3 pmol) Cp*Ge⁺ B(C₆F₅)₄⁻ wurden in 801 mg CD₂Cl₂ gelöst und zu einer Mischung aus 238 mg (2,01 mmol) α-Methylstyrol und 303 mg (2,03 mmol) 1,1,3,3,3-Pentamethyldisiloxan gegeben und die Mischung umgeschüttelt. Die Lösung wurde ¹H-NMR spektroskopisch nach 9 Tagen untersucht. Es war keine Hydrosilylierung nachweisbar.

### Beispiel 1: Herstellung von Cp*Ge⁺ B(C₆F₅)₄⁻

Unter einer Argonatmosphäre wurden 701 mg (2,04 mmol) Decamethylgermanocen (Cp*₂Ge, Cp* = Pentamethylcyclopentadienyl) in 5 ml Dichlormethan gelöst und bei Raumtemperatur langsam unter Schütteln mit einer Lösung von 1,70 g (1,83 mmol) (C₆H₅)₃C⁺ B(C₆F₅)₄-, in 5 ml Dichlormethan versetzt. Anschließend wurde als Fällungsmittel so viel Heptan zugegeben, dass keine weitere Ausfällung des Produkts mehr erfolgte. Die überstehende Lösung wurde abdekantiert, die Fällung erneut in Dichlormethan gelöst und wiederum mit Heptan gefällt. Das gefällte Produkt wurde abgesaugt und getrocknet, zuletzt im Hochvakuum. Ausbeute: 1,63 g (97 %), blass-rosa Feststoff. ¹H-NMR (CD₂Cl₂): δ = 2,23 (Methylgruppen) .
¹³C-NMR (CD₂Cl₂): δ = 8,82 (Methylgruppen), δ = 123,1 (C's Cp*-Ring), δ = 124 (breit), δ = 135,3 (m), δ = 137,3 (m),
δ = 139,2 (m), δ = 147,2 (m), δ = 149,1 (m): aromat. C-F. ¹¹B-NMR (CD₂Cl₂): δ = -16,66 (s) .
¹⁹F-NMR (CD₂Cl₂): δ = -167,4 (mc, 8 ortho-F), δ = -163,5 (mc, 4 para-F), δ = -132,9 (m, breit, 8 meta-F).

Der kristalline Feststoff wurde an Luft 4 Tage gelagert und zeigte keine sichtbare Veränderung, das NMR-Spektrum war identisch mit dem der frisch hergestellten Reinsubstanz.

### Beispiel 2: Herstellung von Cp*Ge⁺ B[C₆F₄ (4-TBS)]₄⁻

365,1 mg (0,279 mmol) (C₆H₅)₃C⁺ B[C₆F₄(4-TBS)]₄⁻ wurden in 965 mg CD₂Cl₂ gelöst und die Lösung auf - 30 °C gekühlt. Unter Argon wurden 114,8 mg (0,335 mmol) Decamethylgermanocen (luftempfindlich!) gelöst in ca. 350 mg CD₂Cl₂ langsam zugegeben. Dabei hellte sich die anfangs dunkel-orange Lösung bis nach schwach gelblich auf. Man versetzte mit 4 ml Pentan, dabei fiel das Produkt als beigefarbener Feststoff aus, und wusch mit kleinen Portionen Pentan nach. Der Feststoff wurde im Vakuum getrocknet. Ausbeute: 300 mg (85 %), beigefarbener Feststoff.
¹H-NMR (CD₂Cl₂): δ = 0,352 (s, 2 Si-CH₃), δ = 0,913 s (Si-tert Butyl), δ = 2,17 (s, 15 H, Cp*).
²⁹Si-NMR (CD₂Cl₂): δ = 5,63 (s, aromat. Silylgruppe)
¹⁹F-NMR (CD₂Cl₂): δ = -132,2 (m, 8 F), δ = - 130,4 (m, 8 F) .

### Beispiel 3: Herstellung von Cp*Ge⁺ B(Naph^{F})₄⁻ mit Naph^{F} = Heptafluor-β-naphthyl

Die Herstellung erfolgte wie in Beispiel 2 durch Umsetzung von Decamethylgermanocen mit (C₆H₅)₃C⁺ B(Naph^{F})₄⁻.
Ausbeute: 92 %, beigefarbener Feststoff.
¹H-NMR (CD₂Cl₂): δ = 2,22 (s, 15 H, Cp*) .
¹⁹F-NMR (CD₂Cl₂): δ = -161,3 bis -160,9 (m, 4F), -159,8 bis - 159,4 (4F), -155,8 bis -154,7 (4F), -150,2 bis -149,8 (4F), - 146,4 bis -145,7 (4F), -125,9 bis -124,4 (4F), -109,8 (mc, 1F), -109,3 (mc, 1F), -108,6 bis -107,7 (m, 1F), -106,5 (mc, 1F) .
¹¹B-NMR (CD₂Cl₂): δ = -13,80.

### Beispiel 4: Herstellung von Cp*Ge⁺ B[(C₆F₄)₃(Naph)]⁻ mit Naph^{F} = Perfluor-β-naphthyl

Die Herstellung erfolgte wie in Beispiel 2 durch Umsetzung von Decamethylgermanocen mit (C₆H₅)₃C⁺ B**[**(C₆F₄)**₃**(Naph^{F})**]**⁻.
Ausbeute: 70 %, beigefarbener Feststoff.
¹H-NMR (CD₂Cl₂): δ = 2,22 (s, 15 H, Cp*) .
¹¹B-NMR (CD₂Cl₂): δ = -16,45.

### Beispiel 5: Hydrosilylierung von α-Methylstyrol mit Dimethylphenylsilan

Unter Argon wurden in ein Reaktionsgefäß 207 mg (1,75 mmol) α-Methylstyrol und 229 mg (1,68 mmol) Dimethylphenylsilan zusammen mit 650 mg CD₂Cl₂ eingewogen und mit 1,7 mg (1,92 pmol, 0,11 mol-% bezogen auf Dimethylphenylsilan) Cp*Ge⁺ B(C₆F₅)₄⁻ in 160 mg CD₂Cl₂ versetzt. Mit einer Spritze wurden 3 ml Luft in die Mischung eingebracht. Nach 24 Stunden bei Raumtemperatur war die Umsetzung vollständig. Es bildete sich Phenyl-CH(CH₃)-CH₂-Si(CH₃)₂Ph.
Produktreinheit (GC) > 90 %,
¹H-NMR (CD₂Cl₂): δ = 0,43 und 0,49 (s, 2 CH₃), δ = 1,52 (mc, CH₂), δ = 1,56 (d, CH3), δ = 3,20 (mc, CH), δ = 7,40 - 7,50 (m, 3 aromat. H), δ = 7,50 - 7,58 (m, 2 aromat. H), δ = 7,59 - 7,66 (m, 3 aromat. H), δ = 7,76 - 7,82 (m, 2 aromat. H).

### Beispiel 6: Hydrosilylierung von α-Methylstyrol mit Dimethylphenylsilan

Unter Argon wurden in ein Reaktionsgefäß 120 mg (1,01 mmol) α-Methylstyrol und 137 mg (1,01 mmol) Dimethylphenylsilan zusammen mit 400 mg CD₂Cl₂ eingewogen und mit 1,2 mg (0,94 pmol, 0,09 mol-% bezogen auf Dimethylphenylsilan) Cp*Ge⁺ B(C₆F₅)₄⁻ in 130 mg CD₂Cl₂ versetzt. Mit einer Spritze wurden 3 ml Luft in die Mischung eingebracht. Nach 24 Stunden bei Raumtemperatur war die Umsetzung vollständig. Es bildete sich Phenyl-CH(CH₃)-CH₂-Si (CH₃)₂Ph.
Produktreinheit (GC) > 90 %,
¹H-NMR (CD₂Cl₂): δ = 0,43 und 0,49 (s, 2 CH₃), δ = 1,52 (mc, CH₂), δ = 1,56 (d, CH3), δ = 3,20 (mc, CH), δ = 7,40 - 7,50 (m, 3 aromat. H), δ = 7,50 - 7,58 (m, 2 aromat. H), δ = 7,59 - 7,66 (m, 3 aromat. H), δ = 7,76 - 7,82 (m, 2 aromat. H).

### Beispiel 7: Hydrosilylierung von α-Methylstyrol mit Pentamethyldisiloxan

1,7 mg (1,9 pmol) Cp*Ge⁺ B(C₆F₅)4⁻ wurden in 890 mg CD₂Cl₂ gelöst und über einen Zeitraum von 15 Minuten unter Luftausschluss bei Raumtemperatur insgesamt ca. 0,6 ml (ca. 30 pmol) Sauerstoff eingeleitet. Die Lösung wurde zu einer Mischung aus 208 mg (1,76 mmol) α-Methylstyrol und 260 mg (1,75 mmol) 1,1,3,3,3-Pentamethyldisiloxan gegeben und umgeschüttelt. Nach 3 Stunden betrug der Umsatz ca. 35 %, nach 24 Stunden war die Umsetzung vollständig. Es bildete sich das Hydrosilylierungsprodukt Phenyl-CH(CH₃)-CH₂-Si(CH₃)₂-O-Si(CH₃)₃, das mittels ¹H-NMR Untersuchung in CD₂Cl₂ und Vergleich mit authentischer Probe nachgewiesen wurde.

### Beispiel 8: Hydrosilylierung von α-Methylstyrol mit Pentamethyldisiloxan

1,7 mg (1, 9 pmol) Cp*Ge⁺ B(C₆F₅)₄- wurden in 890 mg CD₂Cl₂ gelöst, und über einen Zeitraum von 3 Stunden wurden unter Luftausschluss bei Raumtemperatur insgesamt ca. 8 ml (ca. 0,4 mmol) Sauerstoff eingeleitet. Die Hydrosilylierung wurde wie in Beispiel 5 durchgeführt. Nach 4 Stunden betrug der Umsatz ca. 83 %, nach 6 Stunden war die Umsetzung vollständig. Es bildete sich das Hydrosilylierungsprodukt Phenyl-CH(CH₃)-CH₂-Si (CH₃)₂-O-Si(CH₃)₃, das mittels ¹H-NMR Untersuchung in CD₂Cl₂ und Vergleich mit authentischer Probe nachgewiesen wurde.

### Beispiel 9: Hydrosilylierung von α-Methylstyrol mit Pentamethyldisiloxan

1,6 mg (1,8 pmol) Cp*Ge⁺ B(C₆F₅)₄⁻ wurden in 900 mg CD₂Cl₂ gelöst, und über einen Zeitraum von 30 Minuten wurden unter Luftausschluss bei Raumtemperatur insgesamt ca. 1,2 ml (ca. 60 pmol) Sauerstoff eingeleitet. Nach 23 Stunden Standzeit wurde mit dieser Lösung die Hydrosilylierung wie in Beispiel 5 durchgeführt. Nach 3 Stunden betrug der Umsatz ca. 65 %, nach 15 Stunden war die Umsetzung vollständig. Es bildete sich das Hydrosilylierungsprodukt Phenyl-CH(CH₃)-CH₂-Si(CH₃)₂-O-Si(CH₃)₃, das mittels ¹H-NMR Untersuchung in CD₂Cl₂ und Vergleich mit authentischer Probe nachgewiesen wurde.

### Beispiel 10: Hydrosilylierung von α-Methylstyrol mit Pentamethyldisiloxan

299 mg (2,01 mmol) Pentamethyldisiloxan und 248 mg (2,10 mmol) α-Methylstyrol werden vermischt und unter Argon mit einer Lösung von 2,5 mg (2,03 µmol, 0,1 Mol-%) Cp*Ge⁺ B(Naph^{F})₄⁻ in 361 mg CD₂Cl₂ versetzt. Man fügt hintereinander 3-mal 1 ml Luft dem Gasraum über der Lösung zu und schüttelt jeweils für ca. 30 Sekunden. Die Hydrosilylierung wird ¹H-NMR-spektroskopisch bei Raumtemperatur verfolgt. Der Umsatz beträgt nach 6 Stunden 35 %.

### Beispiel 11: Hydrosilylierung von 1-Hexen mit 1,1,3,3,3-Pentamethyldisiloxan

Unter Argon wurden in ein Reaktionsgefäß 139 mg (1,66 mmol) 1-Hexen, 203 mg (1,37 mmol) 1,1,3,3,3-Pentamethyldisiloxan und 500 mg CD₂Cl₂ und eine Lösung von 2,8 mg (3,16 pmol, 0,23 mol-% bezogen auf 1,1,3,3,3-Pentamethyldisiloxan) Cp*Ge⁺ B(C₆F₅)₄⁻ in 170 mg CD₂Cl₂ vermischt. Mit einer Spritze wurden 3 ml Luft (ca. 0,8 mg O₂, entspricht ca. 25 pmol) in den Gasraum zugegeben, das Gefäß verschlossen und 4 Stunden auf 45 °C erwärmt. Die gaschromatographische Untersuchung zeigte einen Umsatz von 90 % an. Hauptprodukt der Umsetzung ist CH₃-(CH₂)₅-Si(CH₃)₂-O-Si(CH₃)₃. Die Identifizierung erfolgte durch Vergleich mit authentischer Substanzprobe.

### Beispiel 12: Hydrosilylierung von α-Methylstyrol mit 1,1,3,3,3-Pentamethyldisiloxan

Die Arbeitsschritte wurden an Luft bei Raumtemperatur durchgeführt.

815 mg (6,90 mmol) α-Methylstyrol und 1116 mg (7,52 mmol) 1,1,3,3,3-Pentamethyldisiloxan wurden vermischt und 1,1 mg (0,865 mmol, 0,0125 mol-% bezogen auf α-Methylstyrol) Cp*Ge⁺ B[C₆F₄(4-TBS)]₄- zugegeben. Nach 24 Stunden war der Umsatz vollständig. Es bildete sich das Hydrosilylierungsprodukt Phenyl-CH(CH₃)-CH₂-Si(CH₃)₂-O-Si(CH₃)₃, das mittels ¹H-NMR Untersuchung in CD₂Cl₂ und Vergleich mit authentischer Probe nachgewiesen wurde.

### Beispiel 13: Hydrosilylierung von α-Methylstyrol mit 1,1,3,3,3-Pentamethyldisiloxan

Die Arbeitsschritte wurden an Luft bei Raumtemperatur durchgeführt.

805 mg (6,81 mmol) α-Methylstyrol und 1009 mg (6,80 mmol) 1,1,3,3,3-Pentamethyldisiloxan wurden vermischt und mit einer Lösung von 9,2 mg (7,23 pmol, 0,106 mol-% bezogen auf 1,1,3,3,3-Pentamethyldisiloxan) Cp*Ge⁺ B[C₆F₄(4-TBS)]₄⁻ gelöst in 941 mg CD₂Cl₂ unter Rühren zugegeben. Es wurde verdünnt mit weiteren 924 mg CD₂Cl₂. Nach 3 Stunden betrug der Umsatz 91 %, nach 24 Stunden war die Umsetzung vollständig. Es bildete sich das Hydrosilylierungsprodukt Phenyl-CH(CH₃)-CH₂-Si(CH₃)₂-O-Si(CH₃)₃, das mittels ¹H-NMR Untersuchung in CD₂Cl₂ und Vergleich mit authentischer Probe nachgewiesen wurde.

Nach erneuter Zugabe eines Gemischs aus 301 mg (2,55 mmol) α-Methylstyrol und 376 mg (2,53 mmol) 1,1,3,3,3-Pentamethyldisiloxan war nach 24 Stunden der Umsatz wiederum vollständig, d.h. die Produktlösung enthielt weiterhin aktive Germanium(II)-Spezies.

Nach weiterer Zugabe eines Gemischs aus 806 mg (6,82 mmol) α-Methylstyrol und 1003 mg (6,76 mmol) 1,1,3,3,3-Pentamethyldisiloxan war nach 24 Stunden der Umsatz wiederum vollständig, d.h. die Produktlösung enthielt weiterhin aktive Germanium(II)-Spezies.

### Beispiel 14: Hydrosilylierung von α-Methylstyrol mit 1,1,3,3,3-Pentamethyldisiloxan

Die Arbeitsschritte wurden an Luft bei Raumtemperatur durchgeführt.

801 mg (6,78 mmol) α-Methylstyrol und 1005 mg (6,78 mmol) 1,1,3,3,3-Pentamethyldisiloxan wurden vermischt, mit 900 mg CD₂Cl₂ versetzt und eine Lösung von 0,9 mg (0,708 pmol, 0,010 mol-% bezogen auf 1,1,3,3,3-Pentamethyldisiloxan) Cp*Ge⁺ B[C₆F₄(4-TBS)]₄- gelöst in 922 mg CD₂Cl₂ unter Rühren versetzt. Nach 24 Stunden war die Umsetzung vollständig. Es bildete sich das Hydrosilylierungsprodukt Phenyl-CH(CH₃)-CH₂-Si(CH₃)₂-O-Si(CH₃)₃, das mittels ¹H-NMR Untersuchung in CD₂Cl₂ und Vergleich mit authentischer Probe nachgewiesen wurde.

### Beispiel 15: Hydrosilylierung von α-Methylstyrol mit 1,1,3,3,3-Pentamethyldisiloxan

In einer Glovebox wurden unter Argonatmosphäre 300 mg (2,02 mmol) 1,1,3,3,3-Pentamethyldisiloxan und 242 mg (2,05 mmol) α-Methylstyrol in einem NMR-Rohr vermischt und mit einer Lösung von 1,9 mg (2,1 pmol) Cp*Ge⁺ B(C₆F₅)₄⁻ in 807 mg d⁸-Toluol versetzt. Nach 9-tägiger Lagerung unter Argon war keine Umsetzung erfolgt. Das Röhrchen wurde geöffnet und mit 1 ml Luft (ca. 9 pmol Sauerstoff) versetzt. Nach 24 Stunden betrug der Umsatz 53 %, nach weiteren 3 Tagen war die Hydrosilylierung vollständig. Es bildete sich das Hydrosilylierungsprodukt Phenyl-CH(CH₃)-CH₂-Si(CH₃)₂-O-Si(CH₃)₃, das mittels ¹H-NMR Untersuchung in d⁸-Toluol und Vergleich mit authentischer Probe nachgewiesen wurde.

### Beispiel 16: Hydrosilylierung von α-Methylstyrol mit 1,1,3,3,3-Pentamethyldisiloxan

Der Versuch nach Beispiel 15 wurde mit CD₂Cl₂ anstelle von d⁸-Toluol wiederholt. Nach 9-tägiger Lagerung unter Argon war keine Umsetzung erfolgt. Das Röhrchen wurde geöffnet und mit 1 ml Luft (ca. 9 pmol Sauerstoff) versetzt. Nach 24 Stunden betrug der Umsatz 33 %, nach 2 Tagen war die Umsetzung vollständig. Es bildete sich das Hydrosilylierungsprodukt Phenyl-CH(CH₃)-CH₂-Si(CH₃)₂-O-Si(CH₃)₃, das mittels ¹H-NMR Untersuchung in CD₂Cl₂ und Vergleich mit authentischer Probe nachgewiesen wurde.

### Beispiel 17: Hydrosilylierung von Phenylacetylen mit Triethylsilan

Unter Argon wurden in einem Reaktionsgefäß 150 mg (1,47 mmol) Phenylacetylen, 171 mg (1,47 mmol) Triethylsilan und 616 mg CD₂Cl₂ gemischt und mit einer Lösung von 1,4 mg (1,58 pmol, 0,11 mol-% bezogen auf Edukte) Cp*Ge⁺ B(C₆F₅)₄⁻ in 100 mg CD₂Cl₂ versetzt. Mit einer Spritze wurden 3 ml Luft (ca. 0,8 mg O₂, entspricht ca. 25 pmol) in den Gasraum zugegeben, das Gefäß verschlossen und 40 Stunden auf 50 °C erwärmt. Durch gaschromatographische und GC/MS-Analyse wurden die folgenden Hydrosilylierungsprodukte in den angegebenen Anteilen nachgewiesen: 60 % Ph-CH=CH-SiEt₃, 10 % Ph-CH₂-CH(SiEt₃)₂.

### Beispiel 18: Hydrosilylierung von 1-Hexin mit Triethylsilan

Die Umsetzung wurde wie in Beispiel 17 mit 103 mg (1,26 mmol) 1-Hexin, 142 mg (1,22 mmol) Triethylsilan, 1,2 g Dichlormethan und 1,3 mg (1,41 µmol) Cp*Ge⁺ B(C₆F₅)₄⁻ in 100 mg CD₂Cl₂ bei 50°C durchgeführt. Die Reaktionszeit betrug 19 Std. Durch gaschromatographische und GC/MS-Analyse wurden ca. 30 % C₄H₉-CH=CH-SiEt₃ nachgewiesen.

## Patentansprüche

1. Mischung **M** enthaltend
(a) mindestens eine Verbindung **A,** die ausgewählt ist aus
(a1) einer Verbindung der allgemeinen Formel **(I)**
**R¹R²R³Si-H** **(I**),
worin die Reste **R¹, R²** und **R³** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei zwei der Reste **R¹, R²** und **R³** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C≡N**, - **OR^{z}**, - **SR^{z},** - **NR^{z}₂,** - **PR^{z}₂,** - **O-CO-R^{z},** - **NH-CO-R^{z},** - **O-CO-OR^{z}** oder - **COOR^{z}** ersetzt sein, eine CH₂-Gruppe kann durch - **O** -, - **S** - oder - **NR^{z}** - ersetzt sein, und ein C-Atom kann durch ein Si-Atom ersetzt sein, worin **R**^{z} jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest; und/oder
(a2) einer Verbindung der allgemeinen Formel **(I')**
**(SiO_{4/2})ₐ(R^{x}SiO_{3/2})_{b}(HSiO_{3/2})_{b'}(R^{x}₂SiO_{2/2})_{c}(R^{x}HSiO_{2/2})_{c'}(H₂SiO_{2/2})_{c"} (R^{x}₃SiO_{1/2})_{d}(HR^{x}₂SiO_{1/2})_{d'}(H₂R^{x}SiO_{1/2})_{d"}(H₃SiO_{1/2})_{d‴}** **(I'),**
worin die Reste **R^{x}** unabhängig voneinander ausgewählt werden aus der Gruppe bestehend aus (i) Halogen, (ii) unsubstituierter oder substituierter C₁-C₂₀-Kohlenwasserstoffrest, und (iii) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen ersetzt sein, eine CH₂-Gruppe kann durch - **O** - oder - **NR^{z}** - ersetzt sein, worin **R^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest;
und worin die Indices **a, b, b', c, c', c", d, d', d", d‴** die Anzahl der jeweiligen Siloxaneinheit in der Verbindung angeben und unabhängig voneinander eine ganze Zahl im Bereich von 0 bis 100.000 bedeuten, mit der Maßgabe, dass die Summe aus **a, b, b', c, c', c", d, d', d", d‴** zusammen mindestens den Wert 2 annimmt und wenigstens einer der Indices **b', c', c", d', d"** oder **d‴** ungleich 0 ist; und
(b) mindestens eine Verbindung **B,** die ausgewählt ist aus
(b1) einer Verbindung der allgemeinen Formel **(II)**
**R⁴R⁵C=CR⁶R⁷** **(II) ,**
und/oder
(b2) einer Verbindung der allgemeinen Formel (**II'**)
**R⁸C≡CR⁹** **(II'),**
worin die Reste **R⁴, R⁵, R⁶, R⁷, R⁸** und **R⁹** unabhängig voneinander ausgewählt werden aus der Gruppe bestehend aus (i) Wasserstoff, (ii) - **C=N,** (iii) Organosiliciumrest mit 1 - 100.000 Siliciumatomen, (iv) unsubstituierter oder substituierter C₁-C₂₀-Kohlenwasserstoffrest, und (v) unsubstituierter oder substituierter C₁-C₂₀-Kohlenwasserstoffoxyrest, wobei zwei der Reste **R⁴**, **R⁵**, **R⁶** und **R⁷** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C≡N,** - **OR^{z}**, - **SR^{z},** - **NR^{z}₂,** - **PR^{z}₂,** - **O-CO-R^{z},** - **NH-CO-R^{z},** - **O-CO-OR^{z},** - **COOR^{z}** oder - **[O-(CH₂)ₙ]ₒ-(CH(O)CH₂)** mit **n** = 1 - 6 und o = 1 - 100 ersetzt sein, eine CH₂-Gruppe kann durch - **O** -, - **S** - oder - **NR^{z}** - ersetzt sein, und ein C-Atom kann durch ein Si-Atom ersetzt sein, worin **R**^{z} jeweils unabhängig voneinander ausgewählt wird aus der Gruppe bestehend aus Wasserstoff, C₁-C₆-Alkyl, C₆-C₁₄-Aryl, und C₂-C₆-Alkenyl; und/ oder
b3) einer Verbindung (oder einer Mischung von Verbindungen) der allgemeinen Formel (**II"**)
**R^{x}₃Si-O[-SiR^{x}₂-O]ₘ-[Si**(**MB)R^{x}-O]ₙ-SiR^{x}₃** **(**II"),
worin die Reste **R^{x}** unabhängig voneinander ausgewählt werden aus der Gruppe bestehend aus (i) Wasserstoff, (ii) Halogen, (iii) **MB,** (iv) unsubstituierter oder substituierter C₁-C₂₀-Kohlenwasserstoffrest, und (v) unsubstituierter oder substituierter C₁-C₂₀-Kohlenwasserstoffoxyrest;
und worin **MB** jeweils unabhängig voneinander (i) - **(CH₂)ₒ-CR=CR₂** oder (ii) - **(CH₂)ₒ-C≡CR** bedeutet, mit **o** = 0 - 12 und **R** jeweils unabhängig voneinander ausgewählt wird aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **C=N,** - **OR^{z}**, - **SR^{z},** - **NR^{z}₂,** - **PR^{z}₂,** - **O-CO-R^{z},** - **NH-CO-R^{z},** - **O-CO-OR^{z}** oder - **COOR^{z}** ersetzt sein, eine CH₂-Gruppe kann durch - **O** -, - **S** - oder - **NR^{z}** - ersetzt sein, und ein C-Atom kann durch ein Si-Atom ersetzt sein, worin R**^{z}** jeweils unabhängig voneinander ausgewählt wird aus der Gruppe bestehend aus Wasserstoff, C₁-C₆-Alkylrest, C₆-C₁₄-Arylrest, und C₂-C₆-Alkenylrest;
und worin **m** und **n** unabhängig voneinander eine ganze Zahl im Bereich von 0 bis 100.000 bedeuten, mit der Maßgabe, dass in der Verbindung mindestens ein Rest **MB** enthalten ist; und
(c) mindestens eine Verbindung **C,** die ausgewählt ist aus kationischen Germanium(II)-Verbindung der allgemeinen Formel **(III)**
**([Ge(II)Cp]⁺) X⁻** (**III),**
worin **Cp** ein π-gebundener Cyclopentadienylrest der allgemeinen Formel (**III_{A}**) ist 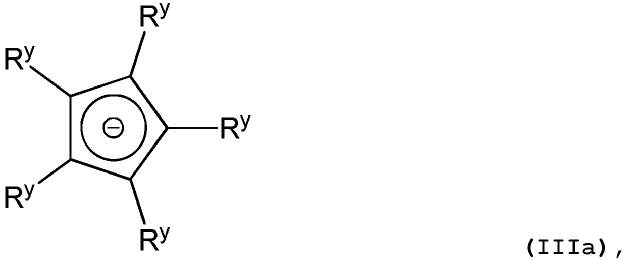 worin die Reste **R^{y}** unabhängig voneinander ausgewählt werden aus der Gruppe bestehend aus (i) Triorganosilylrest der Formel - **SiR^{b}₃,** worin die Reste **R^{b}** unabhängig voneinander C₁-C₂₀-Kohlenwasserstoffrest bedeuten, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei auch jeweils zwei Reste **R^{y}** miteinander einen monocyclischen oder polycyclischen C₂-C₂₀-Kohlenwasserstoffrest bilden können, und wobei substituiert jeweils meint, dass im Kohlenwasserstoff- oder Kohlenwasserstoffoxyrest auch mindestens ein C-Atom durch ein Si-Atom ersetzt sein kann und die Anionen **X-** ausgewählt werden aus der Gruppe bestehend aus den Verbindungen der Formel **[B(R^{a})₄]⁻**, worin die Reste **R^{a}** unabhängig voneinander ausgewählt werden aus aromatischer C₆-C₁₄-Kohlenwasserstoffrest, bei dem alle Wasserstoffatome unabhängig voneinander durch einen Rest, ausgewählt aus der Gruppe bestehend aus (i) Fluor und (ii) Triorganosilylrest der Formel - **SiR^{b}₃,** worin die Reste **R^{b}** unabhängig voneinander C₁-C₂₀-Alkylrest bedeuten, substituiert sind.

2. Mischung **M** nach Anspruch 1, wobei in Formel (**I**) die Reste **R¹**, **R²** und **R³** unabhängig voneinander ausgewählt werden aus der Gruppe bestehend aus (i) Wasserstoff, (ii) Chlor, (iii) unsubstituierter oder substituierter C₁-C₁₂-Kohlenwasserstoffrest, und (iv) unsubstituierter oder substituierter C₁-C₁₂-Kohlenwasserstoffoxyrest, wobei substituiert dieselbe Bedeutung wie zuvor hat; und in Formel (**I'**) die Reste **R^{x}** unabhängig voneinander ausgewählt werden aus der Gruppe bestehend aus Chlor, C₁-C₆-Alkylrest, C₂-C₆-Alkenylrest, Phenyl, und C₁-C₆-Alkoxyrest, und die Indices **a, b, b', c, c', cʺ, d, d', d'', d‴** unabhängig voneinander ausgewählt werden aus einer ganzen Zahl im Bereich von 0 bis 1.

3. Mischung **M** nach Anspruch 2, wobei in Formel (**I**) die Reste **R¹**, **R²** und **R³** unabhängig voneinander ausgewählt werden aus der Gruppe bestehend aus (i) Wasserstoff, (ii) Chlor, (iii) C₁-C₆-Alkylrest, (iv) C₂-C₆-Alkenylrest, (v) Phenyl, und (vi) C₁-C₆-Alkoxyrest; und in Formel (**I'**) die Reste **R^{x}** unabhängig voneinander ausgewählt werden aus der Gruppe bestehend aus Chlor, Methyl, Methoxy, Ethyl, Ethoxy, n-Propyl, n-Propoxy, und Phenyl, und die Indices **a, b, b', c, c'**, **cʺ**, **d**, **d**', **dʺ, d‴** unabhängig voneinander ausgewählt werden aus einer ganzen Zahl im Bereich von 0 bis 1.000.

4. Mischung **M** nach Anspruch 3, wobei in Formel (**I**) die Reste **R¹**, **R²** und **R³** und in Formel (**I'**) die Reste **R^{x}** unabhängig voneinander ausgewählt werden aus der Gruppe bestehend aus Wasserstoff, Chlor, Methyl, Methoxy, Ethyl, Ethoxy, n-Propyl, n-Propoxy, und Phenyl, und die Indices **a, b, b', c, c'**, **cʺ**, **d, d'**, **dʺ, d‴** unabhängig voneinander ausgewählt werden aus einer ganzen Zahl im Bereich von 0 bis 1.000.

5. Mischung **M** nach einem der Ansprüche 1-4, wobei in den Formeln (**II**) und (**II'**) die Reste **R⁴, R⁵, R⁶, R⁷, R⁸** und **R⁹** unabhängig voneinander ausgewählt aus der Gruppe bestehend aus (i) Wasserstoff, (ii) - **C≡N,** (iii) unsubstituierter oder substituierter C₁-C₁₂-Kohlenwasserstoffrest, (iv) unsubstituierter oder substituierter C₁-C₁₂-Kohlenwasserstoffoxyrest, wobei zwei der Reste **R⁴, R⁵, R⁶** und **R⁷** auch miteinander einen monocyclischen oder polycyclischen, unsubstituierten oder substituierten C₂-C₂₀-Kohlenwasserstoffrest bilden können, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen, - **CN,** C₁-C₆-Alkoxy, - **NR^{z}₂**, - **O-CO-R^{z},** - **NH-CO-R^{z},** - **O-CO-OR^{z},** - **COOR^{z}** oder - [**O-(CH₂)ₙ]ₒ-(CH(O)CH₂)** mit **n** = 1 - 3 und **o** = 1 - 20 ersetzt sein, worin **R^{z}** jeweils unabhängig voneinander ausgewählt wird aus der Gruppe bestehend aus Wasserstoff, Chlor, C₁-C₆-Alkyl, C₂-C₆-Alkenyl, und Phenyl; und (v) Organosiliciumrest ausgewählt aus der allgemeinen Formel (**IIa**),
- **(CH₂)ₙ-SiR^{x}₃** (**IIa**),
worin die Reste **R^{x}** unabhängig voneinander ausgewählt werden aus der Gruppe bestehend aus (i) Wasserstoff, (ii) Halogen, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Halogen ersetzt sein, eine CH₂-Gruppe kann durch **- O -** oder - **NR^{z}** - ersetzt sein, worin **R^{z}** ausgewählt wird aus der Gruppe bestehend aus Wasserstoff, C₁-C₆-Alkyl, C₆-C₁₄-Aryl, und C₂-C₆-Alkenyl;
und worin **n** = 0 - 12 bedeutet;
und wobei in Formel (**II"**) die Reste **R^{x}** unabhängig voneinander ausgewählt werden aus der Gruppe bestehend aus (i) Wasserstoff, (ii) Chlor, (iii) C₁-C₆-Alkylrest, (iv) Phenyl, (v) **MB** und (vi) C₁-C₆-Alkoxyrest, wobei **MB** jeweils unabhängig voneinander (i) - **(CH₂)ₒ-CR=CR₂** oder (ii) - **(CH₂)ₒ-C≡CR** bedeutet, mit **o** = 0 - 6 und worin **R** jeweils unabhängig voneinander ausgewählt wird aus der Gruppe bestehend aus (i) Wasserstoff, (ii) Chlor, (iii) C₁-C₆-Alkylrest, (iv) Phenyl, und (v) C₁-C₆-Alkoxyrest.

6. Mischung **M** nach Anspruch 5, wobei in den Formel (**II**) und (**II'**) die Reste **R⁴, R⁵, R⁶, R⁷, R⁸** und **R⁹** unabhängig voneinander ausgewählt werden aus der Gruppe bestehend aus (i) Wasserstoff, (ii) - **C≡N,** (iii) Organosiliciumrest mit 1 - 100.000 Siliciumatomen ausgewählt aus der allgemeinen Formel (**IIa**), worin die Reste **R^{x}** unabhängig voneinander ausgewählt werden aus der Gruppe bestehend aus Wasserstoff, Chlor, C₁-C₆-Alkylrest, C₂-C₆-Alkenylrest, Phenyl und C₁-C₆-Alkoxyrest; (iv) unsubstituierter oder substituierter C₁-C₆-Kohlenwasserstoff, und (v) unsubstituierter oder substituierter C₁-C₆-Kohlenwasserstoffoxyrest, wobei substituiert jeweils meint, dass der Kohlenwasserstoff- oder Kohlenwasserstoffoxyrest unabhängig voneinander mindestens eine der folgenden Substitutionen aufweist: ein Wasserstoffatom kann durch Chlor, - **C≡N,** - **O-CH₂-(CH(O)CH₂)** (**=**Glycidoxyrest), - **NR^{z}₂** und - **O-CO-R^{z}** ersetzt sein, wobei **R^{z}** jeweils unabhängig voneinander ausgewählt wird aus der Gruppe bestehend aus Wasserstoff und C₁-C₆-Alkyl; und wobei in Formel (**II"**) die Reste **R^{x}** unabhängig voneinander ausgewählt werden aus der Gruppe bestehend aus C₁-C₃-Alkylrest und **MB,** wobei **MB** jeweils bedeutet - **(CH₂)ₒ-CR=CR₂,** worin **R** jeweils Wasserstoff ist und **o** = 0 - 6 bedeutet.

7. Mischung **M** nach einem der Ansprüche 1-6, wobei in Formel (**III**) die Reste **R^{y}** unabhängig voneinander ausgewählt werden aus der Gruppe bestehend aus (i) C₁-C₃-Alkylrest und (ii) Triorganosilylrest der Formel - **SiR^{b}₃,** worin die Reste **R^{b}** unabhängig voneinander C₁-C₂₀-Alkylrest bedeuten.

8. Mischung **M** nach Anspruch 7, wobei in Formel (**III**) alle Reste **R^{y}** Methyl bedeuten.

9. Mischung **M** nach Anspruch 8, wobei die Verbindung **C** ausgewählt ist aus der Gruppe bestehend aus **Cp*Ge⁺ B(C₆F₅)4⁻; Cp*Ge⁺ B[C₆F₄(4-TBS)]₄⁻,** mit TBS = SiMe₂*tert-*Butyl; **Cp*Ge⁺ B(2-NaphF)₄⁻,** mit 2-NaphF = perfluorierter 2-Naphthylrest; und **Cp*Ge⁺ B[(C₆F₅)₃(2-NaphF)]⁻,** mit 2-NaphF = perfluorierter 2-Naphthylrest.

10. Verfahren zur Hydrosilylierung der Mischung **M** nach einem der Ansprüche 1-9, wobei mindestens eine Verbindung **A** mit mindestens einer Verbindung **B** in Gegenwart von mindestens einer Verbindung **C** und in Gegenwart von Sauerstoff umgesetzt wird.

11. Verfahren nach Anspruch 10, wobei die Temperatur in einem Bereich von - 100 °C bis + 250 °C liegt und der Druck in einem Bereich von 0,01 bar bis 100 bar liegt.

12. Verfahren nach einem der Ansprüche 10 oder 11, wobei der Sauerstoff aus einem Sauerstoff-haltigen Gasgemisch mit einem Anteil an Sauerstoff von 0,1 - 100 Vol.-% stammt.

13. Verfahren nach Anspruch 12, wobei die Umsetzung unter Luft-, Magerluft- oder Sauerstoffatmosphäre durchgeführt wird.

14. Verfahren nach einem der Ansprüche 10-13, wobei das molare Verhältnis zwischen der Verbindung **C** und den in der Verbindung **A** vorhandenen Si-H-Gruppen in einem Bereich von 1:10⁷ bis 1:1 liegt.

15. Kationische Germanium(II)-Verbindung der allgemeinen Formel (**IV**)
**[Cp*Ge]⁺ [B(R^{a})₄]⁻** **(IV),**
worin **Cp*** ein π-gebundener Pentamethylcyclopentadienylrest ist, und die Reste **R^{a}** jeweils unabhängig voneinander ausgewählt werden aus aromatischer C₆-C₁₄-Kohlenwasserstoffrest, bei dem mindestens ein Wasserstoffatom unabhängig voneinander durch einen Rest ausgewählt aus der Gruppe bestehend aus (i) Fluor, (ii) perfluorierter C₁-C₆-Alkylrest, und (iii) Triorganosilylrest der Formel - **SiR^{b}₃,** worin die Reste **R^{b}** unabhängig voneinander C₁-C₂₀-Alkylrest bedeuten, substituiert ist.

16. Kationische Germanium(II)-Verbindung nach Anspruch 15, wobei die Reste **R^{a}** jeweils unabhängig voneinander ausgewählt werden aus aromatischer C₆-C₁₄-Kohlenwasserstoffrest, bei dem alle Wasserstoffatome unabhängig voneinander durch einen Rest ausgewählt aus der Gruppe bestehend aus (i) Fluor und (ii) Triorganosilylrest der Formel - **SiR^{b}₃,** worin die Reste **R^{b}** unabhängig voneinander C₁-C₂₀-Alkylrest bedeuten, substituiert sind.

17. Kationische Germanium(II)-Verbindung nach Anspruch 16, wobei die Verbindung ausgewählt wird aus der Gruppe bestehend aus **Cp*Ge⁺ B(C₆F₅)₄⁻;**
**Cp*Ge⁺ B[C₆F₄(4-TBS)]₄⁻,** mit TBS = **SiMe₂*tert*-Butyl;**
**Cp*Ge⁺ B(2-NaphF)₄⁻,** mit 2-NaphF = perfluorierter 2-Naphthylrest; und
**Cp*Ge⁺ B[(C₆F₅)₃(2-NaphF)]⁻**, mit 2-NaphF = perfluorierter 2-Naphthylrest.

18. Verfahren zur Herstellung von kationischen Germanium(II)-Verbindungen der allgemeinen Formel (**III**)
**([Ge(II)Cp]⁺) X⁻** **(III)**
wobei
(a)
**[Cp₂Ge(II)]** **(V),**
worin die Reste **Cp** unabhängig voneinander einen **π**-gebundenen Cyclopentadienylrest der allgemeinen Formel (**Va**) bedeuten 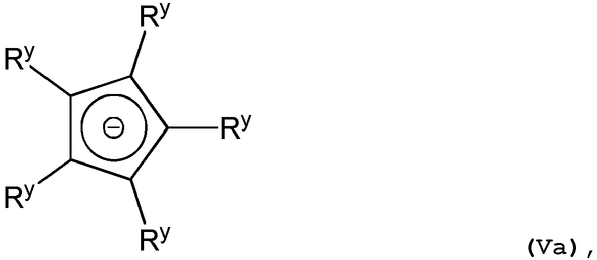 worin die Reste **R^{y}** unabhängig voneinander ausgewählt werden aus der Gruppe bestehend aus (i) Triorganosilylrest der Formel - **SiR^{b}₃,** worin die Reste **R^{b}** unabhängig voneinander C₁-C₂₀-Alkylrest bedeuten, (ii) Wasserstoff, (iii) unsubstituierter oder substituierter C₁-C₂₀-Kohlenwasserstoffrest, und (iv) unsubstituierter oder substituierter C₁-C₂₀-Kohlenwasserstoffoxyrest, wobei auch jeweils zwei Reste **R^{y}** miteinander einen monocyclischen oder polycyclischen C₂-C₂₀-Kohlenwasserstoffrest bilden können, und wobei substituiert jeweils meint, dass im Kohlenwasserstoff- oder Kohlenwasserstoffoxyrest auch mindestens ein C-Atom durch ein Si-Atom ersetzt sein kann, mit der Maßgabe, dass bei mindestens einem Cp-Rest mindestens ein Rest **R^{y}** eine Gruppe - **CHR¹R²** ist, worin **R¹** und **R²** unabhängig voneinander ausgewählt werden aus der Gruppe bestehend aus (i) Wasserstoff, (ii) C₁-C₁₉-Alkylrest und (iii) C₆-C₁₉-Arylrest; mit
(b) einer carbokationischen Verbindung der allgemeinen Formel (**VI**)
**(R^{d}₃C⁺) X⁻** (**VI**),
worin die Anionen **X-** ausgewählt werden aus der Gruppe bestehend aus den Verbindungen der Formel **[B(R^{a})₄]⁻**, worin die Reste **R^{a}** unabhängig voneinander ausgewählt werden aus aromatischer C₆-C₁₄-Kohlenwasserstoffrest, bei dem alle Wasserstoffatome unabhängig voneinander durch einen Rest, ausgewählt aus der Gruppe bestehend aus (i) Fluor und (ii) Triorganosilylrest der Formel - **SiR^{b}₃,** worin die Reste **R^{b}** unabhängig voneinander C₁-C₂₀-Alkylrest bedeuten, substituiert sind.
und worin die Reste **R^{d}** unabhängig voneinander ausgewählt werden aus unsubstituierter oder substituierter, aromatischer C₆-C₁₄-Kohlenwasserstoffrest, wobei substituiert meint, dass der Kohlenwasserstoffrest unabhängig voneinander mindestens eine der folgenden Substitutionen aufweist: ein Wasserstoffatom kann durch Halogen oder C₁-C₆-Alkylrest ersetzt sein;
umgesetzt wird.

19. Katalysatorsystem enthaltend mindestens eine kationische Germanium(II)-Verbindung der allgemeinen Formel (**IV**) gemäß Anspruch 15 und Sauerstoff.

20. Verwendung von kationischen Germanium(II)-Verbindungen der allgemeinen Formel (**III**) gemäß Anspruch 1 als Katalysator.

21. Verwendung nach Anspruch 20, wobei es sich bei der kationischen Germanium(II)-Verbindung um eine der allgemeinen Formel (**IV**) gemäß Anspruch 15 handelt.

## Claims

1. Mixture **M** comprising
(a) at least one compound **A** selected from
(a1) a compound of the general formula (**I**)
**R¹R²R³Si-H** **(I)**,
in which the radicals **R¹**, **R²** and **R³** are each independently selected from the group consisting of (i) hydrogen, (ii) halogen, (iii) unsubstituted or substituted C₁-C₂₀-hydrocarbon radical, and (iv) unsubstituted or substituted C₁-C₂₀-hydrocarbonoxy radical, where two of the radicals **R¹**, **R²** and **R³** may also form with each other a monocyclic or polycyclic, unsubstituted or substituted C₂-C₂₀-hydrocarbon radical, wherein substituted means in each case that the hydrocarbon or hydrocarbonoxy radical each independently has at least one of the following substitutions: a hydrogen atom can be replaced by halogen, **-C≡N, -OR^{z}**, **-SR^{z}**, **-NR^{z}₂, -PR^{z}₂**, **-O-CO-R^{z}, -NH-CO-R^{z}, -O-CO-OR^{z}** or **-COOR^{z},** a CH₂ group can be replaced by - **O-, -S-** or **-NR^{z}-**, and a carbon atom can be replaced by a Si atom, in which **R^{z}** is in each case independently selected from the group consisting of hydrogen, C₁-C₆-alkyl radical, C₆-C₁₄-aryl radical, and C₂-C₆-alkenyl radical; and/or
(a2) a compound of the general formula (**I'**)
**(SiO_{4/2})ₐ(R^{x}SiO_{3/2})_{b}(HSiO_{3/2})_{b'}(R^{x}₂SiO_{2/2})_{c}(R^{x}HSiO_{2/2})_{c'} (H₂SiO_{2/2})_{c"}(R^{x}₃SiO_{1/2})_{d}(HR^{x}₂SiO_{1/2})_{d'}(H₂R^{x}SiO_{1/2})_{d"} (H₃SiO_{1/2})_{d‴}** **(I'),**
in which the radicals **R^{x}** are each independently selected from the group consisting of (i) halogen, (ii) unsubstituted or substituted C₁-C₂₀-hydrocarbon radical, and (iii) unsubstituted or substituted C₁-C₂₀-hydrocarbonoxy radical, wherein substituted means in each case that the hydrocarbon or hydrocarbonoxy radical each independently has at least one of the following substitutions: a hydrogen atom can be replaced by halogen, a CH₂ group can be replaced by **-O-** or **-NR^{z}-** in which **R^{z}** is in each case independently selected from the group consisting of hydrogen, C₁-C₆-alkyl radical, C₆-C₁₄-aryl radical, and C₂-C₆-alkenyl radical;
and in which the indices **a, b, b' , c, c' , c", d, d'**, **d", d‴** specify the number of the respective siloxane unit in the compound and are each independently an integer in the range from 0 to 100 000, with the proviso that the sum of **a, b, b', c, c' , c"**, **d, d'**, **d'', d‴** together has the value of at least 2 and at least one of the indices **b', c', c" , d', d"** or **d‴** is not equal to 0; and
(b) at least one compound **B** selected from
(b1) a compound of the general formula (**II**)
**R⁴R⁵C=CR⁶R⁷** **(II),**
and/or
(b2) a compound of the general formula (**II'**)
**R⁸C≡CR⁹** **(II')**,
in which the radicals **R⁴, R⁵, R⁶, R⁷, R⁸** and **R⁹** are each independently selected from the group consisting of (i) hydrogen, (ii) **-C≡N,** (iii) organosilicon radical having 1 - 100 000 silicon atoms, (iv) unsubstituted or substituted C₁-C₂₀-hydrocarbon radical, and (v) unsubstituted or substituted C₁-C₂₀-hydrocarbonoxy radical, where two of the radicals **R⁴, R⁵, R⁶** and **R⁷** may also form with each other a monocyclic or polycyclic, unsubstituted or substituted C₂-C₂₀-hydrocarbon radical, wherein substituted means in each case that the hydrocarbon or hydrocarbonoxy radical each independently has at least one of the following substitutions: a hydrogen atom can be replaced by halogen, **-C≡N, -OR^{z},** - **SR^{z}, -NR^{z}₂, -PR^{z}₂**, **-O-CO-R^{z}, -NH-CO-R^{z}, -O-CO-OR^{z}, -COOR^{z}** or - **[O-(CH₂)ₙ]ₒ-(CH(O)CH₂)** where **n** = 1 - 6 and **o** = 1 - 100, a CH₂ group can be replaced by **-O-, -S-** or **-NR^{z}-**, and a carbon atom can be replaced by a Si atom, in which **R^{z}** is in each case independently selected from the group consisting of hydrogen, C₁-C₆-alkyl, C₆-C₁₄-aryl, and C₂-C₆-alkenyl; and/or
b3) a compound (or a mixture of compounds) of the general formula (**II"**)
**R^{x}₃Si-O[-SiR^{x}₂-O]ₘ-[Si(MB)R^{x}-O]ₙ-SiR^{x}₃** **(II'),**
in which the radicals **R^{x}** are each independently selected from the group consisting of (i) hydrogen, (ii) halogen, (iii) **MB,** (iv) unsubstituted or substituted C₁-C₂₀-hydrocarbon radical, and (v) unsubstituted or substituted C₁-C₂₀-hydrocarbonoxy radical;
and in which **MB** is each independently (i) **-(CH₂)ₒ-CR=CR₂** or (ii) **-(CH₂)ₒ-C≡CR,** where **o** = 0 - 12 and **R** is in each case independently selected from the group consisting of (i) hydrogen, (ii) halogen, (iii) unsubstituted or substituted C₁-C₂₀-hydrocarbon radical, and (iv) unsubstituted or substituted C₁-C₂₀-hydrocarbonoxy radical, wherein substituted means in each case that the hydrocarbon or hydrocarbonoxy radical each independently has at least one of the following substitutions: a hydrogen atom can be replaced by halogen, **-C≡N, -OR^{z},** - **SR^{z}, -NR^{z}₂, -PR^{z}₂**, **-O-CO-R^{z}, -NH-CO-R^{z}, -O-CO-OR^{z}** or **-COOR^{z},** a CH₂ group can be replaced by **-O-, -S-** or **-NR^{z} -**, and a carbon atom can be replaced by a Si atom, in which **R^{z}** is in each case independently selected from the group consisting of hydrogen, C₁-C₆-alkyl radical, C₆-C₁₄-aryl radical, and C₂-C₆-alkenyl radical;
and in which **m** and **n** are each independently an integer in the range from 0 to 100 000, with the proviso that at least one radical **MB** is present in the compound; and
(c) at least one compound **C** selected from the cationic germanium(II) compound of the general formula (**III**)
**([Ge(II)Cp]⁺) X⁻** **(III)**,
in which **Cp** is a **π**-bonded cyclopentadienyl radical of the general formula (**IIIa**) 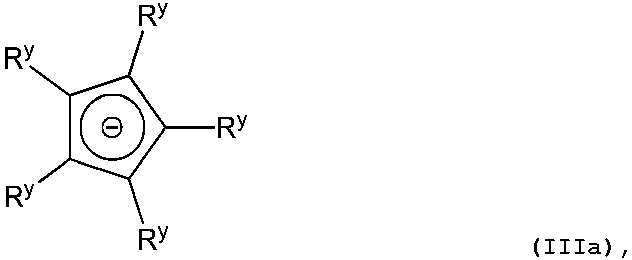 in which the radicals **R^{y}** are each independently selected from the group consisting of (i) triorganosilyl radical of the formula **-SiR^{b}₃** in which the radicals **R^{b}** are each independently C₁-C₂₀-hydrocarbon radical, (ii) hydrogen, (iii) unsubstituted or substituted C₁-C₂₀-hydrocarbon radical, and (iv) unsubstituted or substituted C₁-C₂₀-hydrocarbonoxy radical, wherein in each case two radicals **R^{y}** can also form with each other a monocyclic or polycyclic C₂-C₂₀-hydrocarbon radical, and wherein substituted means in each case that in the hydrocarbon or hydrocarbonoxy radical also at least one carbon atom can be replaced by a Si atom, and the anions **X-** are selected from the group consisting of the compounds of the formula **[B(R^{a})₄]⁻** in which the radicals **R^{a}** are each independently selected from aromatic C₆-C₁₄-hydrocarbon radical in which all hydrogen atoms have been mutually independently substituted by a radical selected from the group consisting of (i) fluorine and (ii) triorganosilyl radical of the formula **-SiR^{b}₃** in which the radicals **R^{b}** are each independently C₁-C₂₀-alkyl radical.

2. Mixture **M** according to Claim 1, wherein in formula (**I**) the radicals **R¹**, **R²** and **R³** are each independently selected from the group consisting of (i) hydrogen, (ii) chlorine, (iii) unsubstituted or substituted C₁-C₁₂-hydrocarbon radical, and (iv) unsubstituted or substituted C₁-C₁₂-hydrocarbonoxy radical, wherein substituted has the same definition as before; and in formula (**I'**) the radicals **R^{x}** are each independently selected from the group consisting of chlorine, C₁-C₆-alkyl radical, C₂-C₆-alkenyl radical, phenyl, and C₁-C₆-alkoxy radical, and the indices **a, b, b', c, c', c", d, d', d'' , d‴** are each independently selected from an integer in the range of 0 to 1.

3. Mixture **M** according to Claim 2, wherein in formula (**I**) the radicals **R¹**, **R²** and **R³** are each independently selected from the group consisting of (i) hydrogen, (ii) chlorine, (iii) C₁-C₆-alkyl radical, (iv) C₂-C₆-alkenyl radical, (v) phenyl, and (vi) C₁-C₆-alkoxy radical; and in formula (**I'**) the radicals **R^{x}** are each independently selected from the group consisting of chlorine, methyl, methoxy, ethyl, ethoxy, n-propyl, n-propoxy, and phenyl, and the indices **a, b, b', c, c', c", d, d'**, **d'', d‴** are each independently selected from an integer in the range from 0 to 1000.

4. Mixture **M** according to Claim 3, wherein in formula (**I**) the radicals **R¹**, **R²** and **R³** and in formula (**I'**) the radicals **R^{x}** are each independently selected from the group consisting of hydrogen, chlorine, methyl, methoxy, ethyl, ethoxy, n-propyl, n-propoxy, and phenyl, and the indices **a, b, b', c, c'**, **c", d, d', d", d‴** are each independently selected from an integer in the range from 0 to 1000.

5. Mixture **M** according to any of claims 1-4, wherein in the formulae (**II**) and (**II'**) the radicals **R⁴, R⁵, R⁶, R⁷, R⁸** and **R⁹** are each independently selected from the group consisting of (i) hydrogen, (ii) **-C≡N,** (iii) unsubstituted or substituted C₁-C₁₂-hydrocarbon radical, (iv) unsubstituted or substituted C₁-C₁₂-hydrocarbonoxy radical, wherein two of the radicals **R⁴, R⁵, R⁶** and **R⁷** may also form with each other a monocyclic or polycyclic, unsubstituted or substituted C₂-C₂₀-hydrocarbon radical, wherein substituted means in each case that the hydrocarbon or hydrocarbonoxy radical each independently has at least one of the following substitutions: a hydrogen atom can be replaced by halogen, **-C≡N,** C₁-C₆-alkoxy, **-NR^{z}₂, -O-CO-R^{z}, -NH-CO-R^{z}, -O-CO-OR^{z}, -COOR^{z}** or - **[O-(CH₂)ₙ]ₒ-(CH(O)CH₂)** where **n** = 1 - 3 and **o** = 1 - 20, in which **R^{z}** is in each case independently selected from the group consisting of hydrogen, chlorine, C₁-C₆-alkyl, C₂-C₆-alkenyl, and phenyl; and (v) organosilicon radical selected from the general formula (**IIa**),
-**(CH₂)ₙ-SiR^{x}₃** (**IIa**),
in which the radicals **R^{x}** are each independently selected from the group consisting of (i) hydrogen, (ii) halogen, (iii) unsubstituted or substituted C₁-C₂₀-hydrocarbon radical, and (iv) unsubstituted or substituted C₁-C₂₀-hydrocarbonoxy radical, wherein substituted means in each case that the hydrocarbon or hydrocarbonoxy radical each independently has at least one of the following substitutions: a hydrogen atom can be replaced by halogen, a CH₂ group can be replaced by **-O-** or **-NR^{z}-** in which **R^{z}** is selected from the group consisting of hydrogen, C₁-C₆-alkyl, C₆-C₁₄-aryl, and C₂-C₆-alkenyl;
and in which **n** = 0 - 12;
and where in formula (**II"**) the radicals **R^{x}** are each independently selected from the group consisting of (i) hydrogen, (ii) chlorine, (iii) C₁-C₆-alkyl radical, (iv) phenyl, (v) **MB** and (vi) C₁-C₆-alkoxy radical, where **MB** is in each case independently (i) -**(CH₂)ₒ-CR=CR₂** or (ii) - **(CH₂)ₒ-C≡CR**, where **o** = 0 - 6 and in which **R** is in each case independently selected from the group consisting of (i) hydrogen, (ii) chlorine, (iii) C₁-C₆-alkyl radical, (iv) phenyl, and (v) C₁-C₆-alkoxy radical.

6. Mixture **M** according to Claim 5, wherein in the formula (**II**) and (**II'**) the radicals **R⁴, R⁵, R⁶, R⁷, R⁸** and **R⁹** are each independently selected from the group consisting of (i) hydrogen, (ii) **-C≡N,** (iii) organosilicon radical having 1 - 100 000 silicon atoms selected from the general formula (**IIa**) in which the radicals **R^{x}** are each independently selected from the group consisting of hydrogen, chlorine, C₁-C₆-alkyl radical, C₂-C₆-alkenyl radical, phenyl and C₁-C₆-alkoxy radical; (iv) unsubstituted or substituted C₁-C₆-hydrocarbon, and (v) unsubstituted or substituted C₁-C₆-hydrocarbonoxy radical, wherein substituted means in each case that the hydrocarbon or hydrocarbonoxy radical has each independently at least one of the following substitutions: a hydrogen atom can be replaced by chlorine, **-C≡N, -O-CH₂-(CH(O)CH₂)** (= glycidoxy radical), **-NR^{z}₂** and **-O-CO-R^{z},** wherein **R^{z}** is in each case independently selected from the group consisting of hydrogen and C₁-C₆-alkyl;
and where in formula (**II"**) the radicals **R^{x}** are each independently selected from the group consisting of C₁-C₃-alkyl radical and **MB,** where **MB** is in each case **-(CH₂)ₒ-CR=CR₂** in which **R** is in each case hydrogen and o = 0 - 6.

7. Mixture **M** according to any of Claims 1-6, wherein in formula (**III**) the radicals **R^{y}** are each independently selected from the group consisting of (i) C₁-C₃-alkyl radical and (ii) triorganosilyl radical of the formula - **SiR^{b}₃** in which the radicals **R^{b}** are each independently C₁-C₂₀-alkyl radical.

8. Mixture **M** according to Claim 7, wherein in formula (**III**) all radicals **R^{y}** are methyl.

9. Mixture **M** according to Claim 8, wherein
the compound **C** is selected from the group consisting of **Cp*Ge⁺ B(C₆F₅)₄⁻; Cp*Ge⁺ B[C₆F₄(4-TBS)]₄⁻**, where TBS = SiMe₂*tert*-butyl; **Cp*Ge⁺ B(2-NaphF)₄⁻,** where 2-NaphF = perfluorinated 2-naphthyl radical; and
**Cp*Ge⁺ B[(C₆F₅)₃(2-NaphF)]⁻**, where 2-NaphF = perfluorinated 2-naphthyl radical.

10. Process for hydrosilylation of the mixture **M** according to any of Claims 1-9, wherein at least one compound **A** is reacted with at least one compound **B** in the presence of at least one compound **C** and in the presence of oxygen.

11. Process according to Claim 10, wherein the temperature is in a range from -100°C to +250°C and the pressure is in a range from 0.01 bar to 100 bar.

12. Process according to either of Claims 10 or 11, wherein the oxygen originates from an oxygen-containing gas mixture having an oxygen content of 0.1-100% by volume.

13. Process according to Claim 12, wherein the reaction is carried out under an air, lean air or oxygen atmosphere.

14. Process according to any of Claims 10-13, wherein the molar ratio between the compound **C** and the Si-H groups present in the compound **A** is in a range from 1:10⁷ to 1:1.

15. Cationic germanium(II) compound of the general formula (**IV**)
**[Cp*Ge]⁺ [B(R^{a})₄]⁻** **(IV)**,
in which **Cp*** is a **π**-bonded pentamethylcyclopentadienyl radical, and the radicals **R^{a}** are each independently selected from aromatic C₆-C₁₄-hydrocarbon radical in which at least one hydrogen atom has been mutually independently substituted by a radical selected from the group consisting of (i) fluorine, (ii) perfluorinated C₁-C₆-alkyl radical, and (iii) triorganosilyl radical of the formula **-SiR^{b}₃** in which the radicals **R^{b}** are each independently C₁-C₂₀-alkyl radical.

16. Cationic germanium(II) compound according to Claim 15, wherein the radicals **R^{a}** are each independently selected from aromatic C₆-C₁₄-hydrocarbon radical in which all hydrogen atoms have been mutually independently substituted by a radical selected from the group consisting of (i) fluorine and (ii) triorganosilyl radical of the formula **-SiR^{b}₃** in which the radicals **R^{b}** are each independently C₁-C₂₀-alkyl radical.

17. Cationic germanium(II) compound according to Claim 16, wherein the compound is selected from the group consisting of **Cp*Ge⁺ B(C₆F₅)₄⁻; Cp*Ge⁺ B[C₆F₄(4-TBS)]₄⁻**, where TBS = **SiMe₂*tert*-butyl; Cp*Ge⁺ B(2-NaphF)₄⁻,** where 2-NaphF = perfluorinated 2-naphthyl radical; and
**Cp*Ge⁺ B[(C₆F₅)₃(2-NaphF)]**⁻, where 2-NaphF = perfluorinated 2-naphthyl radical.

18. Method for preparing cationic germanium(II) compounds of the general formula (**III**)
**([Ge(II)Cp]⁺) X⁻** **(III)**
wherein
(a)
**[Cp₂Ge(II)]** **(V),**
in which the radicals **Cp** are each independently a **π**-bonded cyclopentadienyl radical of the general formula (**Va**) 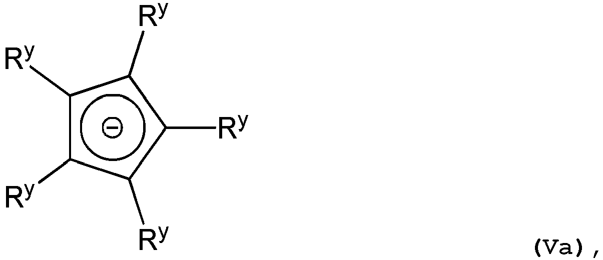 in which the radicals **R^{y}** are each independently selected from the group consisting of (i) triorganosilyl radical of the formula **-SiR^{b}₃** in which the radicals **R^{b}** are each independently C₁-C₂₀-alkyl radical, (ii) hydrogen, (iii) unsubstituted or substituted C₁-C₂₀-hydrocarbon radical, and (iv) unsubstituted or substituted C₁-C₂₀-hydrocarbonoxy radical, wherein in each case two radicals **R^{y}** can also form with each other a monocyclic or polycyclic C₂-C₂₀-hydrocarbon radical, and wherein substituted means in each case that in the hydrocarbon or hydrocarbonoxy radical also at least one carbon atom can be replaced by a Si atom, with the proviso that in at least one Cp radical at least one radical **R^{y}** is a - **CHR¹R²** group in which **R¹** and **R²** are each independently selected from the group consisting of (i) hydrogen, (ii) C₁-C₁₉-alkyl radical and (iii) C₆-C₁₉-aryl radical; is reacted with
(b) a carbocationic compound of the general formula **(VI)**
**(R^{d}₃C⁺) X⁻** **(VI),**
in which the anions **X-** are selected from the group consisting of the compounds of the formula **[B(R^{a})₄]⁻** in which the radicals **R^{a}** are each independently selected from aromatic C₆-C₁₄-hydrocarbon radical in which all hydrogen atoms have been mutually independently substituted by a radical selected from the group consisting of (i) fluorine and (ii) triorganosilyl radical of the formula **-SiR^{b}₃** in which the radicals **R^{b}** are each independently C₁-C₂₀-alkyl radical,
and in which the radicals **R^{d}** are each independently selected from unsubstituted or substituted, aromatic C₆-C₁₄-hydrocarbon radical, wherein substituted means that the hydrocarbon radical each independently has at least one of the following substitutions: a hydrogen atom can be replaced by halogen or C₁-C₆-alkyl radical.

19. Catalyst system comprising at least one cationic germanium(II) compound of the general formula (**IV**) according to Claim 15 and oxygen.

20. Use of cationic germanium(II) compounds of the general formula (**III**) according to Claim 1 as catalyst.

21. Use according to Claim 20, wherein the cationic germanium(II) compound is one of the general formula (**IV**) according to Claim 15.

## Revendications

1. Mélange **M** contenant
(a) au moins un composé **A,** qui est choisi parmi
(a1) un composé de Formule générale (**I**)
**R¹R²R³Si-H** **(I),**
dans laquelle les radicaux **R¹**, **R²** et **R³** sont indépendamment les uns des autres choisis dans le groupe consistant en (i) un hydrogène, (ii) un halogène, (iii) un radical hydrocarboné en C₁-C₂₀ non substitué ou substitué, et (iv) un radical hydrocarboxy en C₁-C₂₀ non substitué ou substitué, deux des radicaux **R¹**, **R²** et **R³** pouvant aussi former les uns avec les autres un radical hydrocarboné en C₂-C₂₀ monocyclique ou polycyclique, non substitué ou substitué, substitué signifiant dans chaque cas que le radical hydrocarboné ou hydrocarboxy présente, indépendamment les unes des autres, au moins l'une des substitutions suivantes : un atome d'hydrogène peut être remplacé par un halogène, - **C≡N**, **-OR^{z}, -SR^{z}**, **-NR^{z}₂, -PR^{z}₂**, **-O-CO-R^{z}, -NH-CO-R^{z}, -O-CO-OR^{z}** ou **-COOR^{z},** un groupe CH₂ peut être remplacé par **-O-, -S-** ou **-NR^{z}-**, et un atome de C peut être remplacé par un atome de Si, **R^{z}** étant chaque fois indépendamment les uns des autres choisi dans le groupe consistant en un hydrogène, un radical alkyle en C₁-C₆, un radical aryle en C₆-C₁₄ et un radical alcényle en C₂-C₆ ; et/ou
(a2) un composé de Formule générale (**I'**)
**(SiO_{4/2})ₐ(R^{x}SiO_{3/2})_{b}(HSiO_{3/2})_{b'}(R^{x}₂SiO_{2/2})_{c}(R^{x}HSiO_{2/2})_{c'} (H₂SiO_{2/2})_{c"}(R^{x}₃SiO_{1/2})_{d}(HR^{x}₂SiO_{1/2})_{d'}(H₂R^{x}SiO_{1/2})_{d"} (H₃SiO_{1/2})_{d‴}** **(I'),**
dans laquelle les radicaux **R^{x}** sont indépendamment les uns des autres choisis dans le groupe consistant en (i) un halogène, (ii) un radical hydrocarboné en C₁-C₂₀ non substitué ou substitué, et (iii) un radical hydrocarboxy en C₁-C₂₀ non substitué ou substitué, substitué signifiant dans chaque cas que le radical hydrocarboné ou hydrocarboxy présente, indépendamment les unes des autres, au moins l'une des substitutions suivantes : un atome d'hydrogène peut être remplacé par un halogène, un groupe CH₂ peut être remplacé par **-O-** ou **-NR^{z}-**, **R^{z}** étant dans chaque cas indépendamment les uns des autres choisi dans le groupe consistant en un hydrogène, un radical alkyle en C₁-C₆, un radical aryle en C₆-C₁₄ et un radical alcényle en C₂-C₆ ;
et dans laquelle les indices **a, b, b`, c, c'**, **c"**, **d, d'**, **d", d‴** indiquent le nombre du motif siloxane considéré dans le composé et indépendamment les uns des autres désignent un nombre entier dans la plage de 0 à 100 000, à la condition que la somme de **a, b, b', c, c'**, **c"**, **d, d'**, **d"**, **d‴,** pris ensemble, prenne au moins la valeur 2, et qu'au moins l'un des indices **b', c', cʺ**, **d', d"** ou **d‴** soit différent de 0 ; et
(b) au moins un composé **B,** qui est choisi parmi
(b1) un composé de Formule générale (**II**)
**R⁴R⁵C=CR⁶R⁷** **(II),**
et/ou
(b2) un composé de Formule générale (**II'**)
**R⁸C≡CR⁹** **(II'),**
dans laquelle les radicaux **R⁴, R⁵, R⁶, R⁷, R⁸** et **R⁹** sont indépendamment les uns des autres choisis dans le groupe consistant en (i) un hydrogène, (ii) **-C≡N,** (iii) un radical organosilicié ayant 1 à 100 000 atomes de silicium, (iv) un radical hydrocarboné en C₁-C₂₀ non substitué ou substitué, et (v) un radical hydrocarboxy en C₁-C₂₀ non substitué ou substitué, chaque paire de radicaux **R⁴, R⁵, R⁶** et **R⁷** pouvant aussi former les uns avec les autres un radical hydrocarboné en C₂-C₂₀ monocyclique ou polycyclique, non substitué ou substitué, substitué signifiant dans chaque cas que le radical hydrocarboné ou hydrocarboxy présente, indépendamment les unes des autres, au moins l'une des substitutions suivantes : un atome d'hydrogène peut être remplacé par un halogène, **-C≡N, -OR^{z}, -SR^{z}, -NR^{z}₂,** - **PR^{z}₂, -O-CO-R^{z}, -NH-CO-R^{z}, -O-CO-OR^{z}, -COOR^{z}** ou **-[O-(CH₂)_{n]o}-(CH(O)CH₂)** avec **n** = 1 à 6 et **o** = 1 à 100, un groupe CH₂ peut être remplacé par **-O-, -S-** ou **-NR^{z}-**, et un atome de C peut être remplacé par un atome de Si, **R^{z}** étant chacun indépendamment les uns des autres choisi dans le groupe consistant en un hydrogène, un alkyle en C₁-C₆, un aryle en C₆-C₁₄ et un alcényle en C₂-C₆ ; et/ou
(b3) un composé (ou un mélange de composés) de Formule générale (**II"**)
**R^{x}₃Si-O[-SiR^{x}₂-O]ₘ-[Si(MB)R^{x}-O]ₙ-SiR^{x}₃** **(II')**,
dans laquelle les radicaux **R^{x}** sont indépendamment les uns des autres choisis dans le groupe consistant en (i) un hydrogène, (ii) un halogène, (iii) **MB,** (iv) un radical hydrocarboné en C₁-C₂₀ non substitué ou substitué, et (v) un radical hydrocarboxy en C₁-C₂₀ non substitué ou substitué ;
et dans laquelle **MB** désigne dans chaque cas indépendamment les uns des autres (i) **-(CH₂)ₒ-CR=CR₂** ou (ii) **-(CH₂)ₒ-C≡CR**, avec **o** = 0 à 12, et **R** est dans chaque cas, indépendamment des autres, choisi dans le groupe consistant en (i) un hydrogène, (ii) un halogène, (iii) un radical hydrocarboné en C₁-C₂₀ non substitué ou substitué, et (iv) un radical hydrocarboxy en C₁-C₂₀ non substitué ou substitué, substitué signifiant dans chaque cas que le radical hydrocarboné ou hydrocarboxy présente indépendamment les unes des autres au moins l'une des substitutions suivantes : un atome d'hydrogène peut être remplacé par un halogène, **-C≡N,-OR^{Z}**, **-SR^{Z}, -NR^{z}₂, -PR^{z}₂**, **-O-CO-R^{z}, -NH-CO-R^{z}, -O-CO-OR^{z}** ou **-COOR^{z},** un groupe CH₂ peut être remplacé par **-O-, -S-** ou **-NR^{z}-**, et un atome de C peut être remplacé par un atome de Si, **R^{z}** étant dans chaque cas indépendamment les uns des autres choisi dans le groupe consistant en un hydrogène, un radical alkyle en C₁-C₆, un radical aryle en C₆-C₁₄ et un radical alcényle en C₂-C₆ ;
et dans laquelle **m** et **n** désignent indépendamment l'un de l'autre un nombre entier dans la plage de 0 à 100 000, à la condition que dans le composé au moins un radical **MB** soit présent ; et
(c) au moins un composé **C,** qui est choisi parmi le composé cationique du germanium(II) de Formule générale (**III**)
**([Ge(II)Cp]⁺) X⁻** **(III)**,
dans laquelle **Cp** représente un radical cyclopentadiényle à liaison ***π*** de Formule générale (**IIIa**) 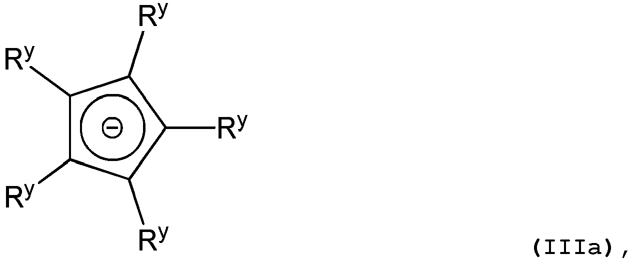 dans laquelle les radicaux **R^{y}** sont indépendamment les uns des autres choisis dans le groupe consistant en (i) un radical triorganosilyle de formule **-SiR^{b}₃,** dans laquelle les radicaux **R^{b}** désignent indépendamment les uns des autres un radical hydrocarboné en C₁-C₂₀, (ii) un hydrogène, (iii) un radical hydrocarboné en C₁-C₂₀ non substitué ou substitué, et (iv) un radical hydrocarboxy en C₁-C₂₀ non substitué ou substitué, chaque paire de radicaux **R^{y}** pouvant aussi former l'un avec l'autre un radical hydrocarboné en C₂-C₂₀ monocyclique ou polycyclique, et substitué signifiant dans chaque cas que, dans le radical hydrocarboné ou hydrocarboxy, au moins un atome de C peut aussi être remplacé par un atome de Si, et les anions **X-** sont choisis dans le groupe consistant en les composés de formule **[B(R^{a})₄**]**⁻,** dans laquelle les radicaux **R^{a}** sont indépendamment les uns des autres choisis parmi un radical hydrocarboné en C₆-C₁₄ aromatique, dans lequel tous les atomes d'hydrogène sont indépendamment les uns des autres substitués par un radical choisi dans le groupe consistant en (i) un fluor et (ii) un radical triorganosilyle de formule **-SiR^{b}₃,** dans laquelle les radicaux **R^{b}** désignent indépendamment les uns des autres un radical alkyle en C₁-C₂₀.

2. Mélange **M** selon la revendication 1, dans lequel, dans la Formule (**I**), les radicaux **R¹**, **R²** et **R³** sont indépendamment les uns des autres choisis dans le groupe consistant en (i) un hydrogène, (ii) un chlore, (iii) un radical hydrocarboné en C₁-C₁₂ non substitué ou substitué, et (iv) un radical hydrocarboxy en C₁-C₁₂ non substitué ou substitué, substitué ayant la même signification que ci-dessus ; et, dans la Formule (**I'**), les radicaux **R^{x}** sont indépendamment les uns des autres choisis dans le groupe consistant en un chlore, un radical alkyle en C₁-C₆, un radical alcényle en C₂-C₆, un phényle et un radical alcoxy en C₁-C₆, et les indices **a, b, b', c, c'**, **c"**, **d, d'**, **d", d‴** sont indépendamment les uns des autres choisis parmi un nombre entier dans la plage de 0 à 1.

3. Mélange **M** selon la revendication 2, dans lequel, dans la Formule (**I**), les radicaux **R¹**, **R²** et **R³** sont indépendamment les uns des autres choisis dans le groupe consistant en (i) un hydrogène, (ii) un chlore, (iii) un radical alkyle en C₁-C₆, (iv) un radical alcényle en C₂-C₆, (v) un phényle, et (vi) un radical alcoxy en C₁-C₆ ; et, dans la Formule (**I'**), les radicaux **R^{x}** sont indépendamment les uns des autres choisis dans le groupe consistant en un chlore, un méthyle, un méthoxy, un éthyle, un éthoxy, un n-propyle, un n-propoxy, et un phényle, et les indices **a, b, b', c, c'**, **c"**, **d, d'**, **d"**, **d‴** sont indépendamment les uns des autres choisis parmi un nombre entier dans la plage de 0 à 1 000.

4. Mélange **M** selon la revendication 3, dans lequel, dans la Formule (**I**), les radicaux **R¹**, **R²** et **R³** et, dans la Formule (**I'**),les radicaux **R^{x}** sont indépendamment les uns des autres choisis dans le groupe consistant en un hydrogène, un chlore, un méthyle, un méthoxy, un éthyle, un éthoxy, un n-propyle, un n-propoxy et un phényle, et les indices **a, b, b', c, c'**, **c"**, **d, d'**, **d", d‴** sont indépendamment les uns des autres choisis parmi un nombre entier dans la plage de 0 à 1 000.

5. Mélange **M** selon l'une des revendications 1 à 4, dans lequel, dans les Formules (**II**) et (**II'**), les radicaux **R⁴, R⁵, R⁶, R⁷, R⁸** et **R⁹** sont indépendamment les uns des autres choisis dans le groupe consistant en (i) un hydrogène, (ii) **-C≡N,** (iii) un radical hydrocarboné en C₁-C₁₂ non substitué ou substitué, (iv) un radical hydrocarboxy en C₁-C₁₂ non substitué ou substitué, chaque paire de radicaux **R⁴, R⁵, R⁶** et **R⁷** pouvant aussi former les uns avec les autres un radical hydrocarboné en C₂-C₂₀ monocyclique ou polycyclique, non substitué ou substitué, substitué signifiant dans chaque cas que le radical hydrocarboné ou hydrocarboxy présente, indépendamment les unes des autres, au moins l'une des substitutions suivantes : un atome d'hydrogène peut être remplacé par un halogène, **-C≡N,** un alcoxy en C₁-C₆, **-NR^{z}₂, -O-CO-R^{z}, -NH-CO-R^{z}, -O-CO-OR^{z}, -COOR^{z}** ou **-[O-(CH₂)ₙ]ₒ-(CH(O)CH₂)**, avec **n** = 1 à 3 et o = 1 à 20, **R^{z}** étant dans chaque cas indépendamment les uns des autres choisi dans le groupe consistant en un hydrogène, un chlore, un alkyle en C₁-C₆, un alcényle en C₂-C₆ et un phényle ; et (v) un radical organosilicié choisi parmi la Formule générale (**IIa**),
- **(CH₂)ₙ-SiR^{x}₃** (**IIa**),
dans laquelle les radicaux **R^{x}** sont indépendamment les uns des autres choisis dans le groupe consistant en (i) un hydrogène, (II) un halogène, (iii) un radical hydrocarboné en C₁-C₂₀ non substitué ou substitué, et (iv) un radical hydrocarboxy en C₁-C₂₀ non substitué ou substitué, substitué signifiant dans chaque cas que le radical hydrocarboné ou hydrocarboxy présente, indépendamment les unes des autres, au moins l'une des substitutions suivantes : un atome d'hydrogène peut être remplacé par un halogène, un groupe CH₂ peut être remplacé par **-O-** ou **-NR^{z}-**, **R^{z}** étant choisi dans le groupe consistant en un hydrogène, un alkyle en C₁-C₆, un aryle en C₆-C₁₄ et un alcényle en C₂-C₆ ;
et dans laquelle **n** = 0 à 12 ;
et, dans la Formule (**II"**), les radicaux **R^{x}** étant indépendamment les uns des autres choisis dans le groupe consistant en (i) un hydrogène, (ii) un chlore, (iii) un radical alkyle en C₁-C₆, (iv) un phényle, (v) **MB** et (vi) un radical alcoxy en C₁-C₆, **MB** désignent dans chaque cas indépendamment les uns des autres (i) - **(CH₂)ₒ-CR=CR₂** ou (ii) **-(CH₂)ₒ-C≡CR,** avec **o** = 0 à 6, et dans laquelle **R,** dans chaque cas, est choisi indépendamment les uns des autres dans le groupe consistant en (i) un hydrogène, (ii) un chlore, (iii) un radical alkyle en C₁-C₆, (iv) un phényle et (v) un radical alcoxy en C₁-C₆.

6. Mélange **M** selon la revendication 5, dans lequel, dans les Formules (**II**) et (**II'**), les radicaux **R⁴, R⁵, R⁶, R⁷, R⁸** et **R⁹** sont indépendamment les uns des autres choisis dans le groupe consistant en (i) un hydrogène, (ii) **-C≡N,** (iii) un radical organosilicié ayant 1 à 100 000 atomes de silicium choisi parmi la Formule générale (**IIa**), dans laquelle les radicaux **R^{x}** sont indépendamment les uns des autres choisis dans le groupe consistant en un hydrogène, un chlore, un radical alkyle en C₁-C₆, un radical alcényle en C₂-C₆, un phényle et un radical alcoxy en C₁-C₆ ; (iv) un hydrocarbure en C₁-C₆ non substitué ou substitué, et (v) un radical hydrocarboxy en C₁-C₆ non substitué ou substitué, substitué signifiant dans chaque cas que le radical hydrocarboné ou hydrocarboxy présente indépendamment les unes des autres au moins l'une des substitutions suivantes : un atome d'hydrogène peut être remplacé par un chlore, **-C≡N, -O-CH₂-(CH(O)CH₂)** (= radical glycidoxy), **-NR^{z}₂** et **-O-CO-OR^{z}, R^{z}** étant dans chaque cas indépendamment les uns des autres choisi dans le groupe consistant en un hydrogène et un alkyle en C₁-C₆ ;
et, dans la Formule (**II"**), les radicaux **R^{x}** sont indépendamment les uns des autres choisis dans le groupe consistant en un radical alkyle en C₁-C₃ et **MB, MB** désignant dans chaque cas **-(CH₂)ₒ-CR=CR₂, R** représentant dans chaque cas un hydrogène et **o** désignant 0 à 6.

7. Mélange **M** selon l'une des revendications 1 à 6, dans lequel, dans la Formule (**III**), les radicaux **R^{y}** sont indépendamment les uns des autres choisis dans le groupe consistant en (i) un radical alkyle en C₁-C₃ et (ii) un radical triorganosilyle de formule **-SiR^{b}₃,** dans laquelle les radicaux **R^{b}** désignent indépendamment les uns des autres un radical alkyle en C₁-C₂₀.

8. Mélange **M** selon la revendication 7, dans lequel, dans la Formule (**III**), tous les radicaux **R^{y}** désignent un méthyle.

9. Mélange **M** selon la revendication 8, dans lequel le composé **C** est choisi dans le groupe consistant en **Cp*Ge⁺ B(C₆F₅)₄⁻; Cp*Ge⁺ B[C₆F₄(4-TBS)]₄⁻,** avec TBS = SiMe₂*tert*-butyle; **Cp*Ge⁺ B(2-NaphF)₄⁻,** avec 2-NaphF = radical 2-naphtyle perfluoré ; et
**Cp*Ge⁺ B[(C₆F₅)₃(2-NaphF)]**⁻, avec 2-NaphF = radical 2-naphtyle perfluoré.

10. Procédé d'hydrosilylation du mélange **M** selon l'une des revendications 1 à 9, dans lequel on fait réagir au moins un composé **A** ayant au moins un composé **B** en présence d'au moins un composé **C** et en présence d'oxygène.

11. Procédé selon la revendication 10, dans lequel la température est comprise dans la plage de -100 °C à +250 °C et la pression est comprise dans la plage de 0,01 bar à 100 bar.

12. Procédé selon l'une des revendications 10 ou 11, dans lequel l'oxygène provient d'un mélange gazeux oxygéné ayant une teneur en oxygène de 0,1 à 100 %-vol.

13. Procédé selon la revendication 12, dans lequel la réaction est mise en œuvre sous atmosphère d'air, d'air pauvre ou d'oxygène.

14. Procédé selon l'une des revendications 10 à 13, dans lequel le rapport en moles entre le composé **C** et les groupes Si-H présents dans le composé **A** est compris dans la plage de 1:10⁷ à 1:1.

15. Composé cationique du germanium(II) de Formule générale (**IV**)
**[Cp*Ge]⁺ [B(R^{a})₄]⁻** **(IV),**
dans laquelle **Cp*** représente un radical pentaméthylcyclopentadiényle à liaison **π,** et les radicaux **R^{a}** sont chacun indépendamment des autres choisis parmi un radical hydrocarboné en C₆-C₁₄ aromatique, dans lequel au moins un atome d'hydrogène est, indépendamment les uns des autres, substitué par un radical choisi dans le groupe consistant en (i) un fluor, (ii) un radical alkyle en C₁-C₆ perfluoré et (iii) un radical triorganosilyle de formule **-SiR^{b}₃,** dans laquelle les radicaux **R^{b}** désignent indépendamment les uns des autres un radical alkyle en C₁-C₂₀.

16. Composé cationique du germanium(II) selon la revendication 15, dans lequel les radicaux **R^{a}** sont chacun indépendamment des autres choisis parmi un radical hydrocarboné en C₆-C₁₄ aromatique, dans lequel tous les atomes d'hydrogène sont indépendamment les uns des autres substitués par un radical choisi dans le groupe consistant en (i) un fluor et (ii) un radical triorganosilyle de formule **-SiR^{b}₃**, dans laquelle les radicaux **R^{b}** désignent indépendamment les uns des autres un radical alkyle en C₁-C₂₀.

17. Composé cationique du germanium(II) selon la revendication 16, le composé étant choisi dans le groupe consistant en **Cp*Ge⁺ B(C₆F₅)₄⁻;**
**Cp*Ge⁺ B[C₆F₄(4-TBS)]₄⁻**, avec TBS = **SiMe₂*tert*-butyle; Cp*Ge⁺ B(2-NaphF)₄⁻,** avec 2-NaphF = radical 2-naphtyle perfluoré ; et
**Cp*Ge⁺ B[(C₆F₅)₃(2-NaphF)]⁻**, avec 2-NaphF = radical 2-naphtyle perfluoré.

18. Procédé de préparation de composés cationiques du germanium(II) de Formule générale (**III**)
**([Ge(II)Cp]⁺) X⁻** **(III)**
dans lequel on fait réagir
(a)
**[Cp₂Ge(II)]** **(V),**
où les radicaux **Cp** désignent indépendamment les uns des autres un radical cyclopentadiényle à liaison **n** de Formule générale (**Va**) 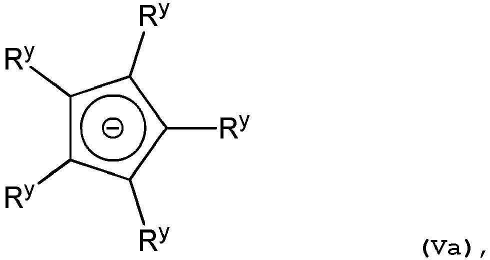 dans laquelle les radicaux **R^{y}** sont indépendamment les uns des autres choisis dans le groupe consistant en (i) un radical triorganosilyle de formule **-SiR^{b}₃,** dans laquelle les radicaux **R^{b}** désignent indépendamment les uns des autres un radical alkyle en C₁-C₂₀, (ii) un hydrogène, (iii) un radical hydrocarboné en C₁-C₂₀ non substitué ou substitué, et (iv) un radical hydrocarboxy en C₁-C₂₀ non substitué ou substitué, chaque paire de radicaux **R^{y}** pouvant aussi former l'un avec l'autre un radical hydrocarboné en C₂-C₂₀ monocyclique ou polycyclique, et substitué signifiant que, dans le radical hydrocarboné ou hydrocarboxy, au moins un atome de C peut aussi être remplacé par un atome de Si, à la condition que, dans au moins un radical Cp, au moins un radical **R^{y}** représente un groupe **-CHR¹R²,** dans lequel **R¹** et **R²** sont indépendamment l'un de l'autre choisis dans le groupe consistant en (i) un hydrogène, (ii) un radical alkyle en C₁-C₁₉ et (iii) un radical aryle en C₆-C₁₉ ; avec
(b) un composé carbocationique de Formule générale (**VI**)
**(R^{d}₃C⁺) X⁻** **(VI),**
dans laquelle les anions **X-** sont choisis dans le groupe consistant en les composés de formule **[B(R^{a})_{4]}⁻,** dans laquelle les radicaux **R^{a}** sont indépendamment les uns des autres choisis parmi un radical hydrocarboné en C₆-C₁₄ aromatique, dans lequel tous les atomes d'hydrogène sont indépendamment les uns des autres substitués par un radical choisi dans le groupe consistant en (i) un fluor et (ii) un radical triorganosilyle de formule - **SiR^{b}₃,** dans laquelle les radicaux **R^{b}** désignent indépendamment les uns des autres un radical alkyle en C₁-C₂₀,
et dans lequel les radicaux **R^{d}** sont indépendamment les uns des autres choisis parmi un radical hydrocarboné en C₆-C₁₄ aromatique, non substitué ou substitué, substitué signifiant que le radical hydrocarboné peut, indépendamment les unes des autres, être substitué par l'une des substitutions suivantes : un atome d'hydrogène peut être remplacé par un halogène ou un radical alkyle en C₁-C₆.

19. Système catalyseur contenant au moins un composé cationique du germanium(II) de Formule générale (**IV**) selon la revendication 15 et de l'oxygène.

20. Utilisation de composés cationiques du germanium(II) de Formule générale (**III**) selon la revendication 1 en tant que catalyseur.

21. Utilisation selon la revendication 20, dans laquelle, pour ce qui est du composé cationique du germanium(II), il s'agit d'un composé de Formule générale (**IV**) selon la revendication 15.
